# NEUE EUROPÄISCHE PATENTSCHRIFT

(11) **EP 2 274 655 B2**
(45) Veröffentlichungstag und Bekanntmachung des Hinweises auf die Entscheidung über den Einspruch: **17.04.2019**
(45) Hinweis auf die Patenterteilung: 05.08.2015
(21) Anmeldenummer: 09729621.4
(22) Anmeldetag: 14.04.2009
(51) Int. Cl.: G05B 19/00, H04L 12/24, H04L 12/40, G05B 19/042, H04L 12/46

(54) **VERFAHREN, SYSTEM UND BUSKOPPLER ZUM AUSTAUSCHEN VON DATEN ZWISCHEN EINEM ÜBERLAGERTEN UND EINEM UNTERLAGERTEN NETZWERK**
METHOD, SYSTEM AND BUS COUPLER FOR EXCHANGING DATA BETWEEN AN OVERLAY NETWORK AND AN UNDERLAY NETWORK
PROCÉDÉ, SYSTÈME ET COUPLEUR DE BUS POUR L'ÉCHANGE DE DONNÉES ENTRE UN RÉSEAU DE RECOUVREMENT ET UN RÉSEAU SOUS-JACENT

(30) Priorität: 11.04.2008 DE 102008018633
(43) Veröffentlichungstag der Anmeldung: 19.01.2011
(73) Patentinhaber: Phoenix Contact GmbH & Co. KG, 32825 Blomberg (DE)
(72) Erfinder: KUSCHKE, Detlev, 32816 Schieder-Schwalenberg (DE); HOFFMANN, Michael, 33813 Oerlinghausen (DE); WEISS, Dominik, 31855 Aerzen (DE)
(74) Vertreter: Kampfenkel, Klaus
(86) Internationale Anmeldenummer: PCT/EP2009/002726
(87) Internationale Veröffentlichungsnummer: WO 2009/124780

(56) Entgegenhaltungen:
- EP-A1- 1 368 939
- EP-A1- 1 509 005
- EP-A1- 1 703 684
- EP-A1- 1 748 338
- EP-A1- 1 816 530
- WO-A1-2004/028090
- WO-A2-03/027784
- DE-A1-102005 025 582
- DE-B4-102004 063 213
- GB-A- 2 442 114
- US-A- 4 498 168
- US-A- 5 251 213
- US-A- 5 604 867
- US-A- 5 802 285
- US-A- 6 038 233
- US-A1- 2005 228 509
- US-A1- 2006 075 009
- US-B1- 6 574 238
- M. FELSER: Real-Time Ethernet - Industry Prospective, vol. 93, no. 6, June 2005 (2005-06), XP055289055,

## Beschreibung

Die Erfindung betrifft allgemein die Automatisierungstechnik und insbesondere ein Verfahren, einen Buskoppler, sowie ein Kommunikationssystem zur Echtzeit-Steuerung eines unterlagerten Bussystems.

In der Automatisierungstechnik kommen zunehmend Ethernetbasierte Feldbus-Systeme zum Einsatz. Basierend auf dem Ethernet-Protokoll benutzen diese Systeme einen Ethernet-Datenrahmen, um ein angeschlossenes Gerät anzusprechen. Ein Ethernet-Datenrahmen weist jedoch einen nicht unerheblichen Overhead an Daten auf, die vornehmlich zur Steuerung von Ethernet-Telegrammen über ein Ethernet-basiertes Netzwerk benötigt werden.

Ein weiterer Nachteil eines Ethernet-basierten Feldbus-Systems besteht in der Notwendigkeit, dass jeder Busteilnehmer physikalisch mit einem Ethernet-Interface ausgerüstet werden muss, obwohl oft nur kleine Strecken überbrückt werden müssen. Dies führt zu unnötig hohen Kosten.

Aus der EP 1 590 927 B1 ist bekannt, zur Ausführung von Steuerungsaufgaben in Echtzeit die für die Echtzeitanwendung vorgesehenen Busteilnehmer an einen ringförmigen Übertragungsweg eines unterlagerten Bussystems anzuschließen, wobei dieser ringförmige Übertragungsweg über einen Netzwerk-Koppler mit einem überlagerten Netzwerk, auf dem Ethernet-Telegramme übertragen werden können, verbunden ist. Der Netzwerk-Koppler ist dabei so ausgelegt, dass ein über eine externe Schnittstelle des Netzwerk-Kopplers vom Netzwerk empfangenes Ethernet-Telegramm an eine interne Schnittstelle des Netzwerk-Kopplers weitergeleitet und auf dem ringförmigen Übertragungsweg ausgegeben wird, wobei jeder an den ringförmigen Übertragungsweg angeschlossene Busteilnehmer beim Durchlauf des Ethernet-Telegramms auf dem ringförmigen Übertragungsweg die für den jeweiligen Busteilnehmer bestimmten Nutzdaten mit dem auf dem ringförmigen Übertragungsweg umlaufenden Ethernet-Telegramm austauscht. Echtzeitanforderungen können dadurch eingehalten werden, dass sich die Reaktionszeit der einzelnen Busteilnehmer durch die Verarbeitung der Ethernet-Telegramme auf dem ringförmigen Übertragungsweg im Durchlauf durch die daran angeschlossenen Busteilnehmer verringert.

Nachteilig an dem in EP 1 590 927 B1 beschriebenen Verfahren ist jedoch, dass das auf dem ringförmigen Übertragungsweg umlaufende Ethernet-Telegramm den oben beschriebenen Overhead an Daten enthält, der ohne einen Nutzen für das unterlagerte Bussystem nur mitgeschleift wird. Dadurch wird unnötiger Weise Übertragungsbandbreite des unterlagerten Bussystems vergeudet, ohne das Management- und/oder Steueraufgaben für das unterlagerte Bussystem implementiert werden können. Ferner führt der Einsatz des ringförmigen Übertragungsweges zu Jitter, durch den die Einhaltung von Echtzeitanforderungen begrenzt wird.

Aus der US 2006/075009 A1 ist ein Verfahren zur Diagnose eines Betriebssystems bekannt. Das bekannte System weist ein Hilfsverarbeitungsmodul auf, welches mit einem Feldbus und einem Bitbus kommuniziert. Hierzu verfügt das Hilfsverarbeitungsmodul über einen Protokollkonverter, der ein Bitbus-Format in ein Feldbus-Format umsetzten kann.

Aus der WO 2004/028090 A1 ist eine Kommunikationssystemarchitektur bekannt, bei der Protokollumsetzer ein WAN-Format oder ein LAN-Format in ein internes Format umsetzten können. Auf diese Weise können über ein WAN oder ein LAN empfangene Pakete über einen internen Bus übertragen werden.

Aus der EP1 703 684 A1 ist ein Gehäuse-Verwaltungssystem bekannt, welches ein Lon-Gateway aufweist. Das Lon-Gateway ist in der Lage, Daten, die über ein Netzwerk einer Klimaanlage übertragen werden, in Daten eines Lon-Netzwerks umzusetzen.

Keines der oben erwähnten Dokumente offenbart einen Buskoppler, welcher derart ausgebildet ist, dass er ein internes Datentelegramm mit einer Struktur erzeugt, die keine Steuerdaten eines netzwerkspezifischen Telegramms, welches über ein externes Netzwerk übertragen wird, enthält und zusätzlich mindestens ein Zustandsinformationsfeld für interne Steuerinformationen aufweist.

Der Artikel "Fieldbus Integration to the Realtime Ethernet Standard Profinet" von Juergen Jasperneite, IFAC, 2005, beschreibt eine Protokollumsetzung zwischen PROFINET und INTERBUS mittels eines Proxys, welcher einen Mapper umfasst und den INTERBUS-Master bildet, wobei verschiedene Ansätze bezüglich der Architektur des Proxys beschrieben werden, sowie eine mögliche Implementierung hinsichtlich des Mappings zwischen PROFINET und INTERBUS.

Im Dokument INTERBUS, User Manual, Peripheral Communication Protocol (PCP) beschreibt ein bei INTERBUS eingesetztes Protokoll.

In dem Buch "Digitale Schnittstellen und Bussysteme" von Friedrich Wittgruber, 2. Auflage, 2002, wird auf den Seiten 142 bis 146 der INTERBUS und insbesondere beim INTERBUS eingesetzte Fernbus-Datentelegramme und fernbus-Statustelegramme beschrieben.

Der Erfindung liegt die Aufgabe zugrunde, ein Kommunikationssystem sowie ein Verfahren zum Austauschen von Daten zwischen einem externen Netzwerk und einem unterlagerten Bussystem über einen Buskoppler bereitzustellen, mit denen eine dezentrale und autarke Überwachung des unterlagerten Bussystems ohne Begrenzung der Übertragungsbandbreite, möglich ist. Darüber hinaus wird eine schnelle Fehlererkennung, gegebenenfalls eine schnelle Reaktion auf erkannte Fehler sowie eine genaue Fehlerlokalisierung in der Kommunikation zwischen zwei Busteilnehmern ermöglicht.

Ein Gesichtspunkt der Erfindung ist darin zu sehen, dass eine dezentrale und vorzugsweise autarke Kommunikationsüberwachung und/oder Diagnose des unterlagerten Bussystems auch dann durchgeführt werden kann, wenn keine Nutzdaten zur Übergabe an das unterlagerte Bussystem im Buskoppler vorliegen. Hierzu erzeugt jeder Busteilnehmer interne Steuertelegramme selbst und tauscht diese über lokale, unabhängige Kommunikationszyklen direkt mit seinem oder seinen beiden benachbarten Busteilnehmern aus.

Der Buskoppler kann anstelle von Nutzdaten enthaltenden internen Datentelegrammen interne Steuertelegramme erzeugen, die durch die Busteilnehmer geleitet werden. Jeder Busteilnehmer kann aus dem Steuertelegramm interne Steuerinformationen auslesen und seine eigenen Steuerinformationen einschreiben.

An dieser Stelle sei angemerkt, dass mit dem Ausdruck "interne Steuertelegramme" im Unterschied zu "internen Datentelegrammen" Telegramme verstanden werden, in denen keine Nutzdaten von netzwerkspezifischen Telegrammen enthalten sind. Daher können interne Steuertelegramme kürzer sein als interne Datentelegramme, so dass bei der Übertragung von internen Steuertelegrammen kürzere Verarbeitungs- oder Verzögerungszeiten in den Busteilnehmern erreicht werden können.

Ein weiterer Gesichtspunkt der Erfindung ist darin zu sehen, eine jitterarme Echtzeitübertragung bzw. - übergabe von in netzwerkspezifischen Telegrammen empfangenen Nutzdaten über bzw. an das überlagerte Bussystem mittels im Buskoppler erzeugter interner Datentelegramme zu ermöglichen. Dies wird durch eine spezielle Datentelegramm-Startkennung und Steuertelegramm-Startkennung erzielt.

Unter einer dezentralen und vorzugsweise autarken Überwachung der Kommunikation über das unterlagerte Bussystem versteht man, dass jeder Busteilnehmer jederzeit, schnell und eigenständig den aktuellen Zustand des unterlagerten Bussystems und insbesondere seiner -benachbarten Busteilnehmer erkennen und gegebenenfalls auf einen fehlerhaften Betrieb reagieren kann.

Ein Buskoppler weist eine externe Schnittstelle zur Anbindung an ein überlagertes, d. h. externes Netzwerk auf, auf dem netzwerkspezifische Telegramme übertragen werden können. Netzwerkspezifisch bedeutet, dass das netzwerkspezifische Telegramm gemäß einem Netzwerk- oder Kommunikationsprotokoll, welches vom externen Netzwerk angewendet wird, erzeugt wird. Der Buskoppler weist ferner eine interne Schnittstelle zur Anbindung einer Mehrzahl von Busteilnehmern in Reihe an einen ringförmigen Übertragungsweg eines internen, d. h. unterlagerten, Bussystems auf. Ferner ist eine Umsetzungseinrichtung vorgesehen, welche ein über die externe Schnittstelle empfangenes netzwerkspezifisches Telegramm in ein internes Datentelegramm zur Übertragung über den ringförmigen Übertragungsweg umsetzen kann. Mit dem Ausdruck "intern" wird angedeutet, dass das Datentelegramm für das unterlagerte Bussystem bestimmt ist. Das interne Datentelegramm enthält keine Steuerdaten des netzwerkspezifischen Telegramms, sondern vorzugsweise nur die darin enthaltenen Nutzdaten. Anstelle der Steuerdaten des netzwerkspezifischen Telegramms enthält das interne Datentelegramm wenigstens ein Zustandsinformationsfeld für interne Steuerinformationen. Das interne Datentelegramm wird an die interne Schnittstelle weitergeleitet und auf den ringförmigen Übertragungsweg ausgegeben. Jeder an die interne Schnittstelle angeschlossene Busteilnehmer tauscht bei Durchlauf des internen Datentelegramms auf dem ringförmigen Übertragungsweg durch den entsprechenden Busteilnehmer die für den Busteilnehmer bestimmten Nutzdaten mit dem auf dem Übertragungsweg umlaufenden internen Datentelegramm aus, wobei der Busteilnehmer Nutzdaten aus einem dem Busteilnehmer zugeordneten Datenblock im Datenfeld des internen Datentelegramms und interne Steuerinformationen aus dem wenigstens einen Zustandsinformationsfeld des internen Datentelegramms entnehmen und seinerseits Nutzdaten in den dem Busteilenehmer zugeordneten Datenblock des Datenfeldes des internen Datentelegramms sowie seine internen Steuerinformationen in das wenigstens eine Zustandsinformationsfeld des internen Datentelegramms einfügen kann.

Die internen Steuerinformationen können buskopplerbezogene Management- und/oder Zustandsinformationen und/oder busteilnehmerbezogene Management- und/oder Zustandsinformationen enthalten, welche zur dezentralen und autarken Überwachung des unterlagerten Bussystems, vornehmlich zur Überwachung der Kommunikation zwischen jeweils zwei benachbarten Busteilnehmern dienen. Die internen Steuerinformationen werden vom Buskoppler und/oder vom jeweiligen Busteilnehmer in das entsprechende Zustandsinformationsfeld geschrieben und aus dem entsprechenden Zustandsinformationsfeld ausgelesen und ausgewertet.

Vorzugsweise handelt es sich bei dem externen Netzwerk um ein Ethernet-basiertes Netzwerk, über das Ethernet-Telegramme übertragen werden. Andere externe Netzwerke, wie zum Beispiel der Profibus, das Profinet oder der CAN-Bus können ebenfalls an die externe Schnittstelle des Buskopplers angeschlossen werden.

Die Umsetzungseinrichtung des Buskopplers kann derart ausgebildet sein, dass sie mehrere über die externe Schnittstelle empfangene netzwerkspezifische Telegramme, die im Buskoppler zwischenspeichert werden können, in ein internes Datentelegramm umsetzt, welches wiederum keine Steuerdaten der netzwerkspezifischen Telegramme enthält. Vorzugsweise werden nur so viele netzwerkspezifische Telegramme in ein internes Datentelegramm umgesetzt, dass das Datenfeld nicht vergrößert werden muss. Damit wird sichergestellt, dass die Übertragungsbandbreite nicht verringert wird.

Selbstverständlich kann die Umsetzungseinrichtung derart ausgebildet sein, dass sie ein über die interne Schnittstelle empfangenes internes Datentelegramm in wenigstens ein netzwerkspezifisches Telegramm zur Übertragung über die externe Schnittstelle umsetzen kann. Ferner können auch mehrere interne Datentelegramme in ein netzwerkspezifisches Telegramm umgesetzt werden.

Der Buskoppler kann eine Einrichtung zum Erzeugen von internen Steuertelegrammen aufweisen. Interne Steuertelegramme können über das unterlagerte Bussystem übertragen werden, wenn keine netzwerkspezifischen Telegramme, also keine Nutzdaten am Buskoppler zur Übertragung über das unterlagerte Bussystem vorliegen. Ein internes Steuertelegramm enthält ein Startkennungsfeld, in das der Buskoppler eine das interne Steuertelegramm identifizierende Kennung schreiben kann, und wenigstens ein Zustandsinformationsfeld zum Einschreiben und Auslesen von buskopplerbezogenen und/oder busteilnehmerbezogenen Steuerinformationen, welche insbesondere zur dezentralen Überwachung und Diagnose der Kommunikation zwischen jeweils zwei Busteilnehmern dienen. Auch das interne Datentelegramm enthält ein Startkennungsfeld für eine das interne Datentelegramm identifizierende Startkennung. Busteilnehmerbezogene interne Steuerinformationen werden vom jeweiligen Busteilnehmer in das wenigstens eine Zustandsinformationsfeld des internen Steuertelegramms geschrieben und daraus ausgelesen. Damit wird sichergestellt, dass sowohl während des normalen Betriebes, dass heißt während der Übertragung von Nutzdaten über das unterlagerte Bussystem, als auch während des inaktiven Betriebszustands interne Steuerinformationen zur dezentralen Überwachung der Kommunikation zwischen jeweils zwei Busteilnehmern ausgetauscht werden können. Hierzu ist vorzugsweise eine Steuereinrichtung im Buskoppler vorgesehen, welche die Übertragung von internen Steuertelegrammen über die interne Schnittstelle auf den ringförmigen Übertragungsweg veranlasst, wenn keine Nutzdaten zur Übertragung über den ringförmigen Übertragungsweg vorliegen.

Um eine echtzeitfähige Nutzdatenübertragung über das unterlagerte Bussystem zu ermöglichen, kann die Steuereinrichtung unter Ansprechen auf eine ein internes Datentelegramm identifizierende Startkennung die Übertragung interner Steuertelegramme in definierter Weise unterbrechen oder beenden, so dass eine Übertragung des internen Datentelegramms über das unterlagerte Bussystem in Echtzeit erfolgen kann.

Angemerkt sei an dieser Stelle, dass über das unterlagerte Bussystem übertragene interne Datentelegramme zweckmäßigerweise nicht durch ein internes Steuertelegramm unterbrochen oder beendet werden können.

Um die dezentrale und vorzugsweise auch autarke Überwachung der Kommunikationsqualität des unterlagerten Bussystems durch die Busteilnehmer zu verbessern, weist der Buskoppler einen Telegrammzähler auf, der die über die interne Schnittstelle tatsächlich gesendeten internen Daten- und/oder Steuertelegramme fortlaufend zählt. Die internen Daten- und/oder Steuertelegramme weisen demzufolge jeweils ein weiteres Zustandsinformationsfeld auf, in das der Buskoppler den aktuellen Wert des Telegrammzählers schreiben kann. Angemerkt sei, dass dieses weitere Zustandsinformationsfeld von den Busteilnehmern nur ausgelesen, aber nicht überschrieben werden kann. Mit anderen Worten enthalten die vom Buskoppler über die interne Schnittstelle ausgesendeten internen Daten- und/oder Steuertelegramme fortlaufende Nummern.

Das oben genannte technische Problem wird durch die Merkmale des Anspruchs 1 gelöst.

Danach ist ein Kommunikationssystem vorgesehen, welches den zuvor beschriebenen Buskoppler sowie eine Mehrzahl von Busteilnehmern enthält, die in Reihe über einen ringförmigen Übertragungsweg eines unterlagerten Bussystems an die interne Schnittstelle des Buskopplers angeschlossen sind. Die Busteilnehmer sind jeweils ausgelegt, die auf dem ringförmigen Übertragungsweg durchlaufenden internen Datentelegramme zu interpretieren und einen Datenaustausch vorzunehmen.

Jeder Busteilnehmer weist folgende Merkmale auf:
Eine erste Schnittstelle mit einer ersten Sende- und Empfangseinrichtung zum Senden und Empfangen von internen Daten- und/oder Steuertelegrammen zu bzw. von einem benachbarten Busteilnehmer sowie eine zweite Schnittstelle mit einer zweiten Sende- und Empfangseinrichtung zum Senden und Empfangen von internen Daten- und/oder Steuertelegrammen zu bzw. von einem zweiten benachbarten Busteilnehmer.

Um eine dezentrale und vorzugsweise autarke Überwachung der Kommunikationsqualität innerhalb des unterlagerten Bussystems über unabhängige Kommunikationszyklen zwischen jeweils zwei benachbarten Busteilnehmern zu ermöglichen, weist jeder Busteilnehmer eine Einrichtung zum Erzeugen von internen Steuertelegrammen auf, welche jeweils ein Startkennungsfeld für eine das interne Steuertelegramm identifizierende Startkennung und wenigstens ein Zustandsinformationsfeld enthalten. Aus einem solchen Zustandsinformationsfeld kann der jeweilige Busteilnehmer Zustandsinformationen von einem seiner benachbarten Busteilnehmer auslesen oder er kann eigene Zustandsinformationen in ein solches Zustandsinformationsfeld schreiben. Die vom jeweiligen Busteilnehmer erzeugten Steuertelegramme werden nur zu seinem benachbarten ersten und/oder zweiten Busteilnehmer übertragen. Auf diese Weise wird eine dezentrale und autarke Diagnose des unterlagerten Bussystems hinsichtlich jeder einzelnen Punkt-zu-Punkt-Verbindung in dem unterlagerten Bussystem ermöglicht, ohne dass eine zentrale Steuereinrichtung benötigt wird.

Damit jeder Busteilnehmer erkennen kann, ob die Schnittstellen seiner benachbarten Busteilnehmer, mit denen er kommuniziert, ordnungsgemäß angeschlossen sind und/oder ob ein Übersprechen oder ein Kurzschluss in wenigstens einem benachbarten Busteilnehmer aufgetreten ist, sind der ersten und zweiten Schnittstelle jedes Busteilnehmers jeweils eine unterschiedliche Schnittstellen-Kennung zugeordnet. Demzufolge enthalten die internen Daten- und/der Steuertelegramme vorzugsweise jeweils ein weiteres Zustandsinformationsfeld für eine Schnittstellen-Kennung. Jeder Busteilnehmer weist eine Einrichtung zum Auslesen einer Schnittstellen-Kennung aus und zum Einschreiben einer Schnittstellen-Kennung in das weitere Zustandsinformationsfeld auf. Eine fehlerhafte Übertragung von Steuer- oder Datentelegrammen, die beispielsweise durch ein Übersprechen oder in Folge eines Kurzschlusses in einem benachbarten Busteilnehmer erfolgt ist, erkennt der jeweilige Busteilnehmer anhand der empfangenen Schnittstellen-Kennung.

Um die Übertragungsqualität zwischen benachbarten Busteilnehmern besser überwachen zu können, kann jeder Busteilnehmer eine Einrichtung zum Ermitteln der Empfangsqualität an seiner ersten und zweiten Schnittstelle aufweisen. Derartige Ermittlungseinrichtungen sind an sich bekannt. Beispielsweise kann die Empfangsqualität anhand der ermittelten Bitfehlerrate empfangener und ausgewerteter interner Daten- und/oder Steuertelegrammen ermittelt werden. Um Informationen über die Empfangsqualität übertragen zu können, enthalten die internen Datenund/oder Steuertelegramme jeweils ein weiteres Zustandsinformationsfeld für eine Empfangs-Zustandsinformation. Weiterhin weist jeder Busteilnehmer eine Einrichtung zum Auslesen einer Empfangs-Zustandsinformation aus und zum Einschreiben einer Empfangs-Zustandsinformation in das weitere Zustandsinformationsfeld auf.

Vorteilhafter Weise weist jeder Busteilnehmer eine Einrichtung auf, die unter Ansprechen auf wenigstens eine in einem internen Daten- oder Steuertelegramm empfangenen Zustandsinformationen die jeweilige erste oder zweite Schnittstelle sperren kann. Auf diese Weise wird sichergestellt, dass ein Busteilnehmer, welcher vor der erfassten Störungsstelle liegt, seine entsprechende Schnittstelle schließen kann, so dass das restliche unterlagerte Bussystem weiter betrieben werden kann.

Jeder Busteilnehmer kann eine Unterbrechungseinrichtung aufweisen, die unter Ansprechen auf die in einem empfangenen internen Datentelegramm enthaltene Startkennung die Erzeugung und/oder Übertragung interner Steuertelegramme in definierter Weise unterbricht oder beendet, so dass eine Übertragung eines aktuell anliegenden internen Datentelegramms in Echtzeit gewährleistet werden kann. Eine solche Unterbrechungseinrichtung ist in jedem Busteilnehmer vorteilhaft, wenn jeweils zwei benachbarte Busteilnehmer ihre selbst erzeugten internen Steuertelegramme in unabhängigen Kommunikationszyklen austauschen und interne Datentelegramme in Echtzeit übertragen werden sollen.

Damit die Busteilnehmer, vorzugsweise ihre Empfangsund/oder Sendeeinrichtungen, auch synchronisiert werden können, wenn keine Nutzdaten übertragen werden, kann die ein internes Steuertelegramm identifizierende Startkennung ein entsprechendes Bitmuster enthalten. Solche Bitmuster können beispielsweise unter Anwendung einer Coded Diphase-Kodierung oder einer Manchester-Kodierung erzeugt werden.

Um eine jitterarme Echtzeitübertragung von internen Datentelegrammen über das unterlagerte Bussystem zu ermöglichen, enthält die ein internes Datentelegramm identifizierende Startkennung und die ein Steuertelegramm identifizierende Startkennung jeweils ein unterschiedliches Bitmuster, derart, dass die Übertragung von internen Steuertelegrammen in definierter Weise, vorzugsweise innerhalb einer Bitdauer unterbrochen oder beendet werden kann. Dadurch können in internen Steuertelegrammen übertragene definierte Zeitreferenzen mit kleinem "Jitter" direkt an alle Busteilnehmer im unterlagerten Bussystem verteilt werden. Auf diese Weise kann mit einfachen Mitteln eine hohe Synchronisationsgenauigkeit erreicht werden.

Vorzugsweise enthält die ein internes Datentelegramm identifizierende Startkennung und/oder die ein Steuertelegramm identifizierende Starkennung jeweils ein erstes und zweites Bitmuster. Die Busteilnehmer sind derart ausgebildet, dass sie eine empfangene Startkennung bereits durch das erste Bitmuster vollständig erkennen können. Dadurch, dass die Startkennung bereits vor ihrem vollständigen Eintreffen erkannt werden kann, kann die Verarbeitungs- oder Verzögerungszeit in den Busteilnehmern verkürzt werden. Das zweite Bitmuster kann genutzt werden, um kurze Zeit später mit größerer Sicherheit feststellen zu können, ob es sich bei den empfangenen Bitmustern tatsächlich um eine vollständige und gültige Startkennung handelt. Entspricht das zweite Bitmuster nicht dem Erwartungswert, kann das Weitersenden des internen Steueroder Datentelegramms abgebrochen oder beendet werden.

Arbeitet das externe Netzwerk und/oder der Buskoppler fehlerhaft, können in den von den Busteilnehmern erzeugten internen Steuertelegrammen sicherheitsrelevante Daten übertragen werden. Hierzu ist ein zusätzliches Datenfeld zur Übertragung von sicherheitsrelevanten Daten im internen Steuertelegramm vorgesehen. Der Buskoppler und/oder jeder Busteilnehmer sind zum Auslesen von sicherheitsrelevanten Daten aus dem zusätzlichen Datenfeld und zum Schreiben von sicherheitsrelevanten Daten in das Datenfeld ausgebildet.

Um die dezentrale und autarke Diagnose oder Überwachung der Kommunikationsqualität des unterlagerten Bussystems weiter zu verbessern, weist jeder Busteilnehmer eine der ersten und zweiten Schnittstelle zugeordnete Fehlererkennungseinrichtung auf, welche prüfen und ermitteln kann, ob und wie viele an der ersten und/oder zweiten Schnittstelle fehlerhafte internen Daten- und/oder Steuertelegrammen empfangen worden sind und/oder ob und wie viele an den jeweiligen Busteilnehmer gesendete interne Daten- und/oder Steuertelegramme nicht erkannt wurden oder verloren gegangen sind. Um benachbarte Busteilnehmer über fehlerhaft empfangene interne Daten- oder Steuertelegramme und/oder über nicht erkannte oder verloren gegangene Datenoder Steuertelegramme informieren zu können, enthalten die internen Daten- und/oder Steuertelegramme jeweils weitere Zustandsinformationsfelder, in die das jeweilige Ergebnis der Fehlererkennungseinrichtung übertragen werden kann.

Um nicht erkannte oder verloren gegangene internen Datenund/oder Steuertelegramme zu erfassen, weist die Fehlererkennungseinrichtung jedes Busteilnehmers vorzugsweise eine erste, der ersten und zweiten Schnittstelle zugeordnete Telegrammzähleinrichtung auf, welche die über die erste Schnittstelle gesendeten internen Daten- und/oder Steuertelegramme fortlaufend zählt und welche die über die zweite Schnittstelle gesendeten internen Daten- und/oder Steuertelegramme ebenfalls fortlaufend zählt. Die internen Daten- und Steuertelegramme können jeweils ein Telegrammnummernfeld als weiteres Zustandsinformationsfeld aufweisen, in welches der jeweilige Wert der ersten Telegrammzählereinrichtung geschrieben werden kann. Durch einen Vergleich des vom Buskoppler aktuell übertragenen Zählwertes, der angibt wie viele interne Daten- und/oder Steuertelegramme bisher dem unterlagerten Bussystem übergeben worden sind, mit dem in einem Telegrammnummernfeld eines Daten- oder Steuertelegramm übertragenen Zählwertes der entsprechenden Telegrammzähleinrichtung, der zusammen mit dem Zählwert des Buskopplers in dem Daten- oder Steuertelegramm übertragen wird, kann der jeweilige Busteilnehmer feststellen, ob sein benachbarter Busteilnehmer interne Daten- und/oder Steuertelegramme nicht erkannt hat.

Um nicht erkannte oder verloren gegangene interne Datenund/oder Steuertelegramme zu erfassen, kann die Fehlererkennungseinrichtung zusätzlich oder alternativ eine zweite, der ersten und zweiten Schnittstelle zugeordnete Telegrammzählereinrichtung aufweisen, welche die an der ersten Schnittstelle empfangenen internen Daten- und/oder Steuertelegramme zählt und welche die an der zweiten Schnittstelle empfangenen internen Daten- und/oder Steuertelegramme ebenfalls zählt. Die Fehlererkennungseinrichtung eines entsprechenden Busteilnehmers erkennt eigene fehlerhafte Empfangseinrichtungen dadurch, dass sie den Zählwert, der angibt, wie viele interne Daten- und/oder Steuertelegramme der jeweils benachbarte Busteilnehmer übertragen hat, mit dem entsprechenden Zählwert hinsichtlich der ersten oder zweiten Schnittstelle vergleicht, der angibt, wie viele interne Daten- und/oder Steuertelegramme die erste oder zweite Empfangseinrichtung empfangen hat. Aus den entsprechenden Vergleichsergebnisse wird die aktuelle Zahl nicht erkannter Steuer- und/oder Datentelegramme hinsichtlich der ersten und zweiten Schnittstelle ermittelt. Diese Zahlen werden in internen Daten- oder Steuertelegrammen, die jeweils zwei weitere Zustandsinformationsfelder enthalten, vom entsprechenden Busteilnehmer zu seinen benachbarten Busteilnehmern übertragen. Jeder Busteilnehmer kann somit maximal sechs Zahlenwerte, nämlich zwei eigene sowie jeweils zwei Werte seiner beiden benachbarten Busteilnehmer zur Verfügung gestellt bekommen. Anhand der zur Verfügung stehenden Werte kann jeder Busteilnehmer selbstständig den Zustand seiner beiden Empfangseinrichtungen mit dem Zustand der Empfangseinrichtungen seiner benachbarten Busteilnehmer vergleichen. Auf diese Weise kann jeder Busteilnehmer erkennen, ob und wie viele Fehler nur in den eigenen Empfangseinrichtungen, beispielsweise aufgrund eines einzelnen schlechten Kontakts der Datenleitung, aufgetreten sind, oder ob und wie viele Fehler in mehreren Busteilnehmern beispielsweise wegen zu hoher EMV-Störungen aufgetreten sind.

Um zu erkennen, ob an der ersten und/oder zweiten Schnittstelle eines Busteilnehmers interne Daten- und Steuertelegramme fehlerhaft empfangen worden sind, kann jeder Busteilnehmer eine Prüfsumme erzeugen. Hierzu weist jeder Busteilnehmer eine Einrichtung zum Erzeugen einer Prüfsumme auf, die über jedes auszusendende interne Daten- oder Steuertelegramm gebildet wird. Die Prüfsumme kann über definierte Abschnitte des Telegramms gebildet werden. Bei einem internen Steuer- oder Datentelegramm wird die Prüfsumme vorteilhafter Weise nur aus den Daten berechnet, die vor dem Prüfsummenfeld liegen. Die Prüfsumme stellt eine weitere Zustandsinformation dar. Um die Prüfsumme zu benachbarten Busteilnehmern übertragen zu können, weisen die internen Daten- oder Steuertelegramme jeweils ein Prüfsummenfeld als weiteres Zustandsinformationsfeld auf, in das der jeweilige Busteilnehmer die erzeugte Prüfsumme schreiben kann. Ferner enthält jeder Busteilnehmer eine Einrichtung zum Auslesen und Auswerten der in einem Daten- und/oder Steuertelegramm empfangenen Prüfsumme. Beim Auswerten der in einem Daten- oder Steuertelegramm empfangenen Prüfsumme bildet der Busteilnehmer vorzugsweise zunächst die Prüfsumme über das empfangene Daten- oder Steuertelegramm oder den bestimmten Abschnitt des empfangenen Daten- oder Steuertelegramms und vergleicht die berechnete Prüfsumme mit der in dem empfangenen Daten- oder Steuertelegramm enthaltenen Prüfsumme. Fehlerhaft erkannte Steuer- und/oder Datentelegramme werden fortlaufend gezählt. In jedem Busteilnehmer wird zudem die Summe über alle fehlerhaft erkannten und nicht erkannten Steuer- und/oder Datentelegramme gebildet.

Dank der Fehlererkennungseinrichtung können schleichend auftretende Fehler im internen Bussystem von jedem Busteilnehmer dezentral und autark erkannt und selbständig an die übergeordnete Steuereinrichtung berichtet werden. Stellt ein entsprechender Busteilnehmer fest, dass sich im Laufe der Zeit fehlerhaft erkannte und/oder verloren gegangene Daten- und/oder Steuertelegramme an einer der von ihm überwachten sechs Schnittstellen angehäuft haben, so kann er eine entsprechende Fehlerinformation erzeugen und während einer Datentelegrammübertragung in einem Datentelegramm zum Buskoppler übertragen. Die Fehlerinformation muss nicht sofort übertragen werden. Vielmehr geht es darum, Fehler, die über einen längeren Zeitraum auftreten, zu erkennen und zu interpretieren. Die Fehlerinformation kann die Anzahl fehlerhaft erkannter und/oder nicht erkannter Daten- und/oder Steuertelegramme, die Schnittstellenkennung und eine Angabe über den betreffenden Busteilnehmer enthalten. Die Fehlerinformation kann alternativ oder zusätzlich einen Differenzwert enthalten, der die Differenz zwischen der Anzahl der fehlerhaft und/oder nicht erkannten Steuer- und/oder Datentelegramme der auffällig fehlerbehafteten Schnittstelle und dem Mittelwert angibt, der über die fehlerhaft und/oder nicht erkannten Steuer- und/oder Datentelegramme der übrigen Schnittstellen gebildet wird. Mittels dieser Fehlerinformationen kann der Buskoppler und somit das Wartungspersonal über den Zustand der Schnittstellen der angeschlossenen Busteilnehmer informiert werden. Das Wartungspersonal kann dann rechtzeitig vor dem vollständigen Ausfall eines Busteilnehmers diesen austauschen.

Das oben genannte technische Problem wird ebenfalls durch die Verfahrensschritte des Anspruchs 14 gelöst.

Danach wird ein Verfahren zum Austauschen von Daten zwischen einem Netzwerk, auf dem Ethernet-Telegramme übertragen werden können, und einer Mehrzahl von Busteilnehmern über einen Buskoppler zur Verfügung gestellt. Das Netzwerk ist an eine externe Schnittstelle des Buskopplers angebunden. Die Mehrzahl von Busteilnehmern ist über eine interne Schnittstelle des Buskopplers in Reihe an einen ringförmigen Übertragungsweg angebunden. Ein über die externe Schnittstelle des Buskopplers empfangenes Ethernet-Telegramm wird in einer Umsetzeinrichtung in ein internes Datentelegramm, welches keine Steuerdaten des Ethernet-Telegramms enthält, umgesetzt. Das interne Datentelegramm enthält wenigstens ein Zustandsinformationsfeld für interne Steuerdaten enthält. Das interne Datentelegramm wird an die interne Schnittstelle des Buskopplers weitergeleitet und auf den ringförmigen Übertragungsweg ausgegeben. Jeder an die interne Schnittstelle angeschlossene Busteilnehmer tauscht bei Durchlauf des internen Datentelegramms auf den ringförmigen Übertragungsweg durch den entsprechenden Busteilnehmer die für den Busteilnehmer bestimmte Nutzungsdaten mit dem auf dem Übertragungsweg umlaufenden internen Datentelegramm aus, wobei der Busteilnehmer Nutzdaten aus einem dem Busteilnehmer zugeordneten Datenblock im Datenfeld des internen Datentelegramms und interne Steuerdaten aus dem wenigstens einen Zustandsinformationsfeld des internen Datentelegramms entnehmen und seinerseits Nutzdaten in den dem Busteilnehmer zugeordneten Datenblock des Datenfeldes des internen Datentelegramms sowie interne Steuerdaten in das wenigstens eine Zustandsinformationsfeld des internen Datentelegramms einfügen kann.

Die internen Steuerdaten enthalten busteilnehmerbezogene Zustandsinformationen. Jeder Busteilnehmer kann interne Steuertelegramme erzeugen, welche jeweils ein Startkennungs-Feld für eine die internen Steuertelegrammen identifizierende Startkennung und wenigstens ein Zustandsinformationsfeld für busteilnehmerbezogene Zustandsinformationen enthalten. Die Zustandsinformationen dienen zur dezentralen und autarken Überwachung und/oder Diagnose der Kommunikation zwischen jeweils zwei Busteilnehmern. Wenn im Buskoppler keine internen Datentelegramme zur Übertragung vorliegen, können jeweils benachbarte Busteilnehmer über unabhängige Kommunikationswege interne Steuertelegramme austauschen, welche zur dezentralen und autarken Überwachung der Kommunikation zwischen jeweils zwei Busteilnehmern dienen.

Die Erfindung wird nachfolgend anhand einiger Ausführungsbeispiels in Verbindung mit den beiliegenden Zeichnungen näher erläutert.

Es zeigen:
- Fig. 1:: ein beispielhaftes unterlagertes Bussystem, welches über einen Buskoppler an ein externes Netzwerk angeschlossen ist, sowie einen detaillierten Aufbau eines Busteilnehmers,
- Fig. 2:: einen Abschnitt des in Fig. 1 gezeigten unterlagerten Bussystems mit zwei autarken Überwachungskommunikationszyklen,
- Fig. 3a:: einen schematischen Aufbau eines Ethernet-Telegramms,
- Fig. 3b:: ein beispielhaftes, im Buskoppler erzeugtes internes Datentelegramm,
- Fig. 3c:: ein beispielhaftes, im Buskoppler oder einem Busteilnehmern erzeugtes internes Steuertelegramm,
- Fig. 3d:: ein alternatives, im Buskoppler oder einem Busteilnehmern erzeugtes verkürztes internes Steuertelegramm,
- Fig. 4a:: eine beispielhafte Startkennung eines internen Datentelegramms, und
- Fig. 4b:: eine beispielhafte Startkennung eines internen Steuertelegramms.

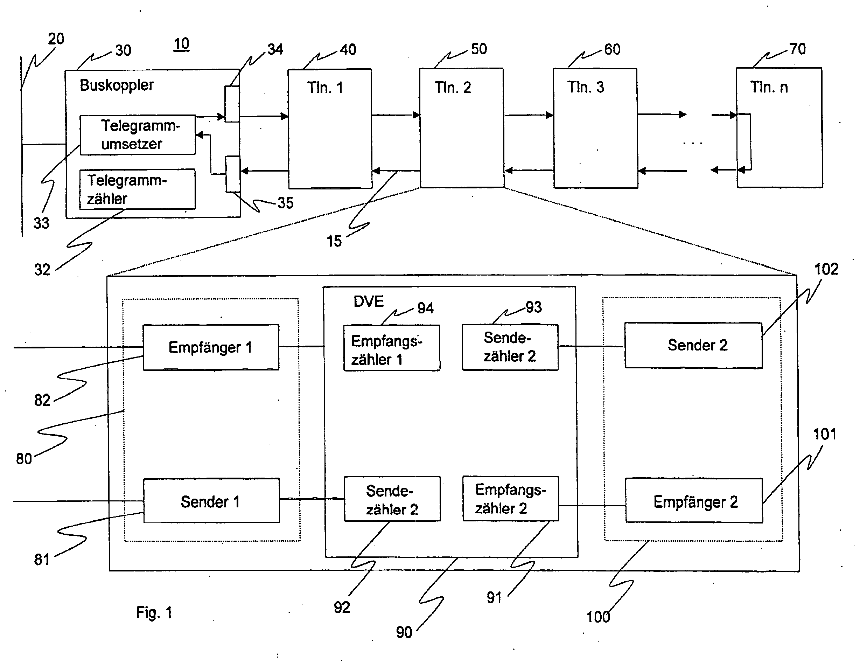

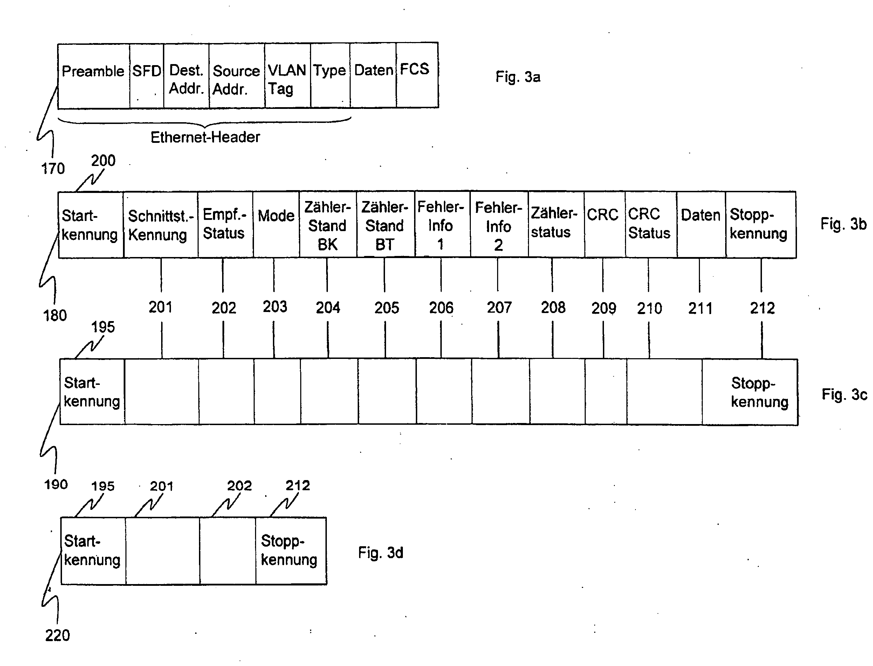

Fig. 1 zeigt ein beispielhaftes Kommunikationssystem 10, welches ein Automatisierungssystem sein kann. Das Automatisierungssystem 10 weist ein überlagertes, also externes Netzwerk 20 auf, welches im vorliegenden Beispiel ein Ethernet basiertes Netzwerk ist. Über das externe Netzwerk 20 können Ethernet-Telegramme übertragen werden. Eine an sich bekannte Struktur eines Ethernet-Telegramms 170 ist in Fig. 3a dargestellt. Das überlagerte Netzwerk 20 ist über einen Buskoppler 30 mit einem unterlagerten, also internen Bussystem 15 verbunden. Das interne Bussystem 15 umfasst im vorliegenden Beispiel einen ringförmigen Übertragungspfad. Der Buskoppler 30 weist eine Schnittstelle (nicht dargestellt) auf, an die das externe Netzwerk 20 angeschlossen ist. Zudem weist der Buskoppler eine interne Schnittstelle auf, welche eine Sendeeinrichtung 34 und eine Empfangseinrichtung 35 enthält, an welche ein Busteilnehmer 40 des Bussystems 15 angeschlossen ist. Das unterlagerte Bussystem 15 umfasst beispielsweise n in Reihe geschaltete Busteilnehmer 40 bis 70.

In dem Buskoppler 30 ist weiterhin eine Telegramm-Umsetzungseinrichtung 33 implementiert, welche die vom überlagerten Netzwerk 20 kommenden Ethernet-Telegramme in interne Datentelegramme umsetzt. Ein beispielhaftes internes Datentelegramm 180 ist in Fig. 3b gezeigt. Angemerkt sei bereits an dieser Stelle, dass einige der in Fig. 3b gezeigten Zustandsinformationsfelder nicht vom Buskoppler 30, sondern von den Busteilnehmern beschrieben, ausgelesen und verarbeitet werden.

Bei einer vorteilhaften Ausführungsform entfernt die Telegramm-Umsetzungseinrichtung 33 den Steuerdaten enthaltenen Ethernetheader aus jedem empfangenen Ethernet-Telegramm 170 und schreibt vornehmlich nur die im Datenfeld übertragenen Nutzdaten in das Datenfeld 211 eines internen Datentelegramms. Die Ethernet-Telegramme 170 werden vorzugsweise in gleich lange interne Datentelegramme umgesetzt. Die Datentelegramme 180 werden über die Sendeeinrichtung 34 dem unterlagerten Bussystem 15 übergeben und über die Busteilnehmer 40 bis 70 und wieder zurück zur Empfangseinrichtung 35 übertragen. Weiterhin ist im Buskoppler 30 ein Telegrammzähler 32 implementiert, der die über die Sendeeinrichtung 34 auszusendenden internen Datentelegramme 180 fortlaufend zählt. Die laufende Nummer wird in das Feld 204 jedes zu sendenden Datentelegramms 180 eingetragen. Das Feld 204 wird als Zählerstand BK bezeichnet.

Der Buskoppler 30 kann anstelle von internen Datentelegrammen auch interne Steuertelegramme erzeugen, die keine Nutzdaten eines Ethernettelegramms enthalten. In diesem Fall zählt der Telegrammzähler 32 die zu übertragenen Daten- und Steuertelegramme fortlaufend. Zwei beispielhafte interne Steuertelegramme sind in Fig. 3c bzw. Fig. 3d dargestellt. Sie werden weiter unten noch näher erläutert.

Bereits an dieser Stelle sei darauf hingewiesen, dass bei einer bevorzugten Ausführungsform jeder Busteilnehmer solche internen Steuertelegramme erzeugen kann, die er über unabhängige Kommunikationszyklen mit seinen benachbarten Busteilnehmern zur dezentralen und autarken Überwachung des unterlagerten Bussystems 15 austauschen kann.

Der beispielhafte Aufbau der Busteilnehmer 40 bis 70 wird beispielhaft anhand des Busteilnehmers 50 näher beschrieben.

Der Busteilnehmer 50 weist eine erste Schnittstelle 80 auf, über die der Busteilnehmer 50 mit einem ersten benachbarten Busteilnehmer, im vorliegenden Beispiel mit dem Busteilnehmer 40 verbunden ist. Die erste Schnittstelle 80 enthält einen Empfänger 82 und einen Sender 81. Die Kennzeichnung des Empfängers 82 und des Senders 81 als Empfänger 1 und Sender 1 verdeutlicht, dass der Busteilnehmer 50 über eine Empfangsleitung Rx1 und eine Sendeleitung Tx1 mit dem ersten Teilnehmer 40 verbunden ist. Weiterhin enthält der Busteilnehmer 50 eine zweite Schnittstelleneinrichtung 100, über die der Busteilnehmer 50 mit einem zweiten benachbarten Busteilnehmer, im vorliegenden Beispiel mit dem Busteilnehmer 60 verbunden ist. Die zweite Schnittstelle 100 enthält wiederum einen Sender 102 und einen Empfänger 101. Der Sender 102 und der Empfänger 101 werden auch als Sender 2 und Empfänger 2 bezeichnet, um zu verdeutlichen, dass der Busteilnehmer 50 mit dem zweiten benachbarten Busteilnehmer 60 über eine Sendeleitung Tx2 und eine Empfangsleitung Rx2 verbunden ist. An dieser Stelle sei bereits darauf hingewiesen, dass der ersten Schnittstelle jedes Busteilnehmers die Schnittstellenkennung 1 und der zweiten Schnittstelle jedes Busteilnehmers die Schnittstellenkennung 2 zugeordnet sein kann. Darüber hinaus kann jede Schnittstellenkennung zusätzlich eine individuelle Kennung des jeweiligen Busteilnehmers enthalten, um die jeweiligen Schnittstellen eindeutiger kennzeichnen zu können. Eine Datenverarbeitungs- und Steuereinrichtung 90 ist sowohl mit der ersten Schnittstelle 80 als auch mit der zweiten Schnittstelle 100 verbunden. Die Datenverarbeitungs- und Steuereinrichtung 90 kann unter Anderem einen Sendezähler 93 aufweisen, der die über den Sender 102 zum Busteilnehmer 60 zu übertragenden internen Steuer- und/oder Datentelegramme fortlaufend zählt, während ein zweiter Sendezähler 92, die über den Sender 81 zum Busteilnehmer 40 zu übertragenden internen Daten- und/oder Steuertelegramme fortlaufend zählt. Weiterhin kann die Datenverarbeitungs- und Steuereinrichtung 90 einen Empfangszähler 94 enthalten, welcher die am Empfänger 82 vom Busteilnehmer 40 empfangenen internen Daten- und/oder Steuertelegramme zählt. Ein zweiter Empfangszähler 91 zählt die am Empfänger 101 vom Busteilnehmer 60 angekommenen internen Daten- und/oder Steuertelegramme. Angemerkt sei, dass die Datenverarbeitungs- und Steuereinrichtung 90 sowie die Sendezähler 92 und 93 und die Empfangszähler 91 und 94 auch als separate Bauteile aufgebaut sein können. Weiterhin kann die Datenverarbeitungs- und Steuereinrichtung 90 zum Berechnen einer Prüfsumme aus vorbestimmten Daten eines internen Steuer- und/oder Datentelegramms und zum Vergleichen von einer intern berechneten Prüfsumme mit einer in einem Steuer- oder Datentelegramm empfangenen Prüfsumme ausgebildet sein, um fehlerhaft empfangene Datenoder Steuertelegramme erkennen zu können. Zudem kann die Datenverarbeitungs- und Steuereinrichtung 90 die aktuellen Zählerstände der Empfangszähler 91 und 94 mit den aktuellen Zählerständen der Sendezähler der benachbarten Busteilnehmer 40 und 60 vergleichen, um nicht erkannte oder verloren gegangene Daten- oder Steuertelegramme zu erkennen. Die Sende- und Empfangszähler werden auch als Telegrammzähleinrichtungen bezeichnet. Diese Fähigkeiten werden unten noch näher erläutert. Die Sendezähler 92 und 93, die Empfangszähler 91 und 94, die Einrichtung zur Berechnung von Prüfsummen sowie die Vergleichseinrichtungen können auch zusammenfassend als Fehlererkennungseinrichtung bezeichnet werden.

Wir betrachten nunmehr Fig. 3b, welches eine beispielhafte Struktur eines vom Buskoppler 30 erzeugbaren internen Datentelegramms 180 zeigt. Ein solches Datentelegramm kann optionale Felder 200 bis 212 enthalten, die im vorliegenden Beispiel der Reihe nach für folgende Kennungen, Steuer-, Management- und/oder Zustandsinformationen vorgesehen sind:
Eine Datentelegramm-Startkennung; eine Schnittstellenkennung eines Busteilnehmers, die eine erste oder zweite Schnittstelle eines Busteilnehmers kennzeichnet; eine Information über den Empfangszustand einer ersten oder zweiten Schnittstelle eines Busteilnehmers; eine Modenkennung, die beispielsweise die Anzahl, die Größe und den Inhalt der Felder festlegt, den überlagerten Netzwerktyp und/oder unterlagerten Bussystemtyp und dergleichen angibt und/oder ein Steuertelegramm oder Datentelegramm kennzeichnet, (diese Informationen können auch in separaten Feldern stehen); die im Buskoppler 30 erzeugte laufende Nummer für zu sendende Datentelegramme; die von einem Busteilnehmer erzeugte laufende Nummer für über seine erste oder zweite Schnittstelle zu sendende Datentelegramme; Fehlerinformationen hinsichtlich der ersten Schnittstelle eines Busteilnehmers, die angeben, ob Datentelegramme fehlerhaft oder gar nicht erkannt worden sind; Fehlerinformation hinsichtlich der zweiten Schnittstelle des Busteilnehmers, die angeben, ob Datentelegramme fehlerhaft oder gar nicht erkannt worden sind; Zählerstatusinformationen, die darauf hinweisen, wenn ein Zähler nicht ordnungsgemäß aktualisiert oder zurückgesetzt werden konnte; zum Beispiel eine CRC-Prüfsumme, welche die vor ihr liegendenen Daten absichert und von jedem Busteilnehmer vor Absenden eines Datentelegramms neu berechnet wird; eine CRC-Statusinformation, die auf einen zuvor in einem benachbarten Busteilnehmer aufgetretenen Fehler hinweist, so dass die in den Feldern 203 und 204 stehenden Informationen, die unverändert von Busteilnehmer zu Busteilnehmer weitergeleitet werden, nicht mehr ausgewertet werden; die aus einem Ethernet-Telegramm entnommenen Nutzdaten, und eine Datentelegramm-Stoppkennung. Angemerkt sei, dass das in Fig. 3a gezeigte Ethernettelegramm 170 und das in Fig. 3b gezeigte interne Datentelegramm gleich lang sein können. Dank des besonderen internen Datentelegramms kann die Kommunikationsqualität des internen Bussystems 15 auch während des Betriebs, d. h. während der Übertragung von Nutzdaten, dezentral und autark von den angeschlossenen Busteilnehmern 40 bis 70 überwacht werden. Eine zentrale Steuereinrichtung ist somit nicht erforderlich.

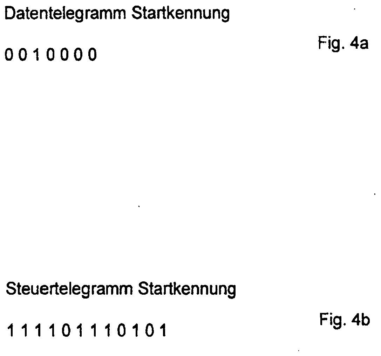

Fig. 3c zeigt ein erstes beispielhaftes internes Steuertelegramm 190, welches vom Buskoppler 30, insbesondere jedoch von den Busteilnehmern erzeugt werden kann. Das Steuertelegramm 190 kann die gleichen Felder 201 bis 210 und 212 des Datentelegramms 180 enthalten. Zwar enthält das Steuertelegramm ebenfalls ein Startkennungsfeld 195. Allerdings enthält ein Steuertelegramm kein Nutzdatenfeld 211, in dem Nutzdaten eines Ethernet-Telegramms übertragen werden können. Zudem unterscheidet sich die Startkennung eines Steuertelegramms von der Startkennung eines Datentelegramms, wie in Fig. 4a und 4b gezeigt ist. Ein Grund hierfür ist, dass, wie unten noch geschildert wird, ein Datentelegramm die Übertragung eines Steuertelegramms in definierter Weise und somit präzise unterbrechen bzw. beenden kann.

Fig. 3d zeigt ein alternatives, gegenüber dem Steuertelegramm 190 verkürztes Steuertelegramm 220, welches lediglich das Startkennungsfeld 195, und die Felder 201, 202 und 212 des Steuertelegramms 190 enthält. Dank der verkürzten Steuertelegramme 220 können kürzere Verarbeitungs- oder Verzögerungszeiten in den Busteilnehmern erreicht und somit Steuerinformationen schneller zwischen benachbarten Busteilnehmern ausgetauscht werden.

Soll die Übertragung der in Fig. 3c und 3d gezeigten Steuertelegramme unterbrochen oder beendet werden können, wie nachfolgend noch erläutert wird, so sind die einzelnen Bits der Nutzinformationsfelder (201 bis 210 bzw. 201 und 202) durch feste Bitfolgen oder einzelne Bits getrennt. Diese Maßnahme verhindert, dass aus einem unterbrochenen Steuertelegramm irrtümlich eine gültige Startkennung eines Datentelegramms entstehen kann.

Wir kehren noch einmal zu Fig. 1 zurück. Die Datenverarbeitungs- und Steuereinrichtung 90 kann in der Lage sein, das Startkennungsfeld 200 eines Datentelegramms, das Startkennungsfeld 195 eines Steuertelegramms, sowie die Zustandsinformationsfelder 201 bis 212 eines Steuer- oder Datentelegramms auszulesen und die ausgelesenen Informationen auszuwerten, um gegebenenfalls implementierte Funktionen auszuführen. Darüber hinaus kann die Datenverarbeitungs- und Steuereinrichtung 90 je nach Systemimplementierung entsprechende teilnehmerbezogene Zustandsinformationen in die jeweiligen Zustandsinformationsfelder, z. B. die Felder 201, 202, 204 bis 210 schreiben. Ferner kann die Datenverarbeitungs- und Steuereinrichtung 90 die für den Busteilnehmer 40 bestimmten Nutzdaten eines Datentelegramms aus dem dem Busteilnehmer 40 zugeordneten Datenblock des Datenfeldes 211 auslesen und gegebenenfalls teilnehmerbezogene Nutzdaten in diesen Datenblock schreiben. Weiterhin kann die Datenverarbeitungs- und Steuereinrichtung 90 derart ausgebildet sein, dass sie die Empfangsqualität der ersten Schnittstelle 80, die die Qualität der Kombination aus dem Empfänger 82, der Empfangsleitung Rx1 und dem Sender 132 widerspiegelt, und die Empfangsqualität des Empfängers 101 der zweiten Schnittstelle 100, die die Qualität der Kombination aus dem Empfänger 101, der Empfangsleitung Rx2 und dem Sender 141 widerspiegelt, ermitteln kann. Auf diese Weise wird zudem die Übertragungsqualität der Leitung Rx1 zwischen dem Empfänger 82 des Busteilnehmers 50 und dem Sender 132 des Busteilnehmers 40 sowie Übertragungsqualität der Leitung Rx2 zwischen dem Empfänger 101 des Busteilnehmers 50 und dem Sender 141 des Busteilnehmers 60 ermittelt.

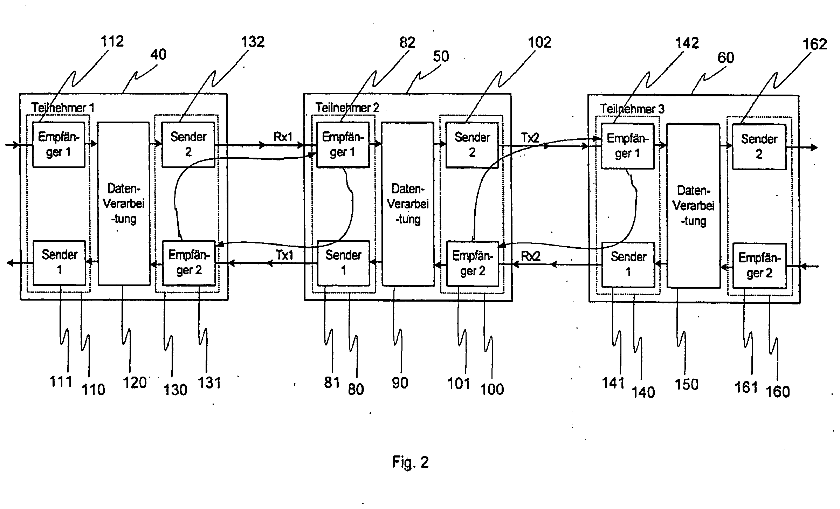

Wir betrachten nunmehr Fig. 2. Der einfachen Darstellung wegen sind lediglich die drei Busteilnehmer 40, 50 und 60 gezeigt. Weiterhin sind Kommunikationszyklen zwischen dem Busteilnehmer 50 und seinen beiden benachbarten Busteilnehmern 40 und 60 schematisch angedeutet, über die Steuertelegramme zwischen den Busteilnehmer 40 und 50 und den Busteilnehmern 50 und 60 dezentral und unabhängig voneinander ausgetauscht werden können. Auf diese Weise kann die Kommunikationsqualität des internen Bussystems 15 und insbesondere die Kommunikation zwischen den benachbarten Busteilnehmern 40 und 50 bzw. 50 und 60 dezentral und autark überwacht und diagnostiziert werden, auch wenn keine Nutzdaten vom Buskoppler in Datentelegrammen übertragen werden.

Wie bereits erwähnt, können alle Busteilnehmer gleich aufgebaut sein. Folglich enthält der Busteilnehmer 40 eine erste Schnittstelleneinrichtung 110, welche einen Empfänger 112 und einen Sender 111 aufweist, eine Datenverarbeitungs- und Steuereinrichtung 120 und eine zweite Schnittstelleneinrichtung 130, welche wiederum einen Sender 132 und einen Empfänger 131 aufweist. Die Datenverarbeitungs- und Steuereinrichtung 120 ist wiederum mit der ersten und zweiten Schnittstelleneinrichtung verbunden. In ähnlicher Weise weist der Busteilnehmer 60 eine erste Schnittstelleneinrichtung 140 auf, welche wiederum einen Empfänger 142 und einen Sender 141 enthält. Weiterhin ist eine Datenverarbeitungs- und Steuereinrichtung 150 im Busteilnehmer implementiert. Eine zweite Schnittstelleneinrichtung 160 enthält wiederum einen Sender 162 und einen Empfänger 161. Wie aus Fig. 2 deutlich wird, ist der Busteilnehmer 50 über seine erste Schnittstelle 80 mit der zweiten Schnittstelle 130 des Busteilnehmers 40 und über seine zweite Schnittstelle 100 mit der ersten Schnittstelle 140 des Busteilnehmers 60 verbunden. Auf ähnliche Weise sind die anderen Busteilnehmer mit ihren jeweiligen benachbarten Busteilnehmern verbunden.
Nachfolgend wird die Funktionsweise des in Fig. 1 Kommunikationssystems 10 näher erläutert.

### 1. Bevorzugte Übertragung von Steuertelegrammen in lokalen unabhängigen Kommunikationszyklen

Angenommen sei ein Szenario, bei dem aktuell keine für den Buskoppler 30 bestimmten Ethernet-basierten Telegramme über das externe Netzwerk 20 übertragen werden. Demzufolge liegen im Buskoppler 30 keine Nutzdaten vor, die über das unterlagerte Bussystem 15 übertragen werden müssen. Um trotzdem eine dezentrale und autarke Überwachung des unterlagerten Bussystems 15 durchführen zu können, erzeugen die Busteilnehmer 40 bis 70 beispielsweise in der jeweiligen Datenverarbeitungs- und Steuereinrichtung interne Steuertelegramme, die in unabhängig voneinander aufgebauten Kommunikationszyklen zwischen benachbarten Busteilnehmern ausgetauscht werden. Dieser Austausch von Steuertelegrammen wird nachfolgend anhand der zwischen den Busteilnehmern 40 und 50 bzw. 50 und 60 aufgebauten unabhängigen Kommunikationsverbindungen näher erläutert.
Die Datenverarbeitungs- und Steuereinrichtung 120 des Busteilnehmers 40 erzeugt nunmehr interne Steuertelegramme, die beispielsweise das in Fig. 3d gezeigte Format aufweisen können. Zunächst wird eine Startkennung in das Startkennungsfeld 220 eines zu erzeugenden Steuertelegramms geschrieben, welche aus der in Fig. 4b gezeigten Bitfolge "111101110101" bestehen kann. Da das interne Steuertelegramm über den Sender 132 der zweiten Schnittstelleneinrichtung 130 zum Busteilnehmer 50 übertragen werden soll, wird im fehlerfreien Fall in das in Fig. 3d gezeigte Feld 201 die Zahl 2 geschrieben, welche die zweite Schnittstelle 130 des Busteilnehmers 40 kennzeichnet. Die Datenverarbeitungs- und Steuereinrichtung 120 kann derart ausgebildet sein, dass sie die Empfangsqualität hinsichtlich der ersten Schnittstelle 110, d. h. der Kombination aus Empfänger 112, Sender des Buskopplers 15 und der Empfangsleitung Rx2, und hinsichtlich der zweiten Schnittstelle 130, also der Kombination aus Empfänger 131, Sendeleitung Tx1 und Sender 81, ermitteln kann. Angenommen sei, dass die Datenverarbeitungs- und Steuereinrichtung 120 eine ausreichende Empfangsqualität hinsichtlich der Schnittstelle 30 ermittelt hat. Demzufolge schreibt die Datenverarbeitungs- und Steuereinrichtung 120 in das in Fig. 3d gezeigte Feld 202 beispielsweise eine logische "1" ein, welche angibt, dass der Empfängerstatus gut ist. Die einzelnen Bits der Felder 201 und 202 sind, wie oben erwähnt, beispielsweise jeweils durch eine feste Bitfolge voneinander getrennt. Das Steuertelegramm wird nicht mit der in Fig. 3d gezeigten Stoppkennung abgeschlossen. Das interne Steuertelegramm, welches unter Anderem eine Information über den Empfangszustand der Kombination aus Empfänger 131, Sendeleitung Tx1 und Sender 81 enthält, wird nunmehr vom Sender 132 des Busteilnehmers 40 zum Empfänger 82 des Busteilnehmers 50 übertragen. Weitere Steuertelegramme werden in ähnlicher Weise zum Busteilnehmer 50 übertragen.

In ähnlicher Weise, aber unabhängig vom Busteilnehmer 40, erzeugt die Datenverarbeitungs- und Steuereinrichtung 90 des Busteilnehmers 50 Steuertelegramme. Insbesondere schreibt die Datenverarbeitungs- und Steuereinrichtung 90 im ordnungsgemäßen Betrieb die Schnittstellenkennung "1" der ersten Schnittstelle 80 in das entsprechende Feld 201 eines zu übertragenden Steuertelegramms. Die Datenverarbeitungs- und Steuereinrichtung 90 kann derart ausgebildet sein, dass sie die Empfangsqualität der Kombination aus Empfänger 82, Empfangsleitung Rx1 und Sender 132 und der Kombination aus Empfänger 101, Empfangsleitung Rx2 und Sender 141 ermitteln kann. Angenommen sei, dass auch die Datenverarbeitungs- und Steuereinrichtung 90 eine ausreichende Empfangsqualität hinsichtlich des Empfängers 81 ermittelt hat. Demzufolge schreibt die Datenverarbeitungs- und Steuereinrichtung 90 in das in Fig. 3d gezeigte Feld 202 beispielsweise eine logische 1 ein, welche angibt, dass der Empfängerstatus gut ist. Die einzelnen Bits der Felder 201 und 202 sind, wie oben erwähnt, beispielsweise jeweils durch eine feste Bitfolge voneinander getrennt. Das Steuertelegramm wird nicht mit der in Fig. 3d gezeigten Stoppkennung abgeschlossen.

Nunmehr sendet der Sender 81 unabhängig von dem Busteilnehmer 40 das erzeugte Steuertelegramm und weitere Steuertelegramme zum Empfänger 131 des Busteilnehmers 40.

In ähnlicher Weise können die Datenverarbeitungs- und Steuereinrichtung aller Busteilnehmer 40 bis 70 unabhängig voneinander Steuertelegramme erzeugen und zu ihren jeweils benachbarten Busteilnehmern übertragen.

Die Busteilnehmer können somit immer wieder eigene Steuertelegramme erzeugen und diese aufgrund ihrer kurzen Länge schnell untereinander austauschen, und zwar insbesondere solange, wie keine Datentelegramme vom Buskoppler 30 für das unterlagerte Bussystem vorliegen. Wie beschrieben, sendet der Sender 132 des Busteilnehmers 40 Informationen über den Empfangszustand hinsichtlich der zweiten Schnittstelle 130 zum Empfänger 82 des Busteilnehmers 50, während der Sender 81 des Busteilnehmers 50 in seinen erzeugten internen Steuertelegrammen Informationen über den Empfangszustand hinsichtlich der ersten Schnittstelle 80 zum Busteilnehmer 40 überträgt.

Angenommen sei nunmehr der Fall, dass die Datenverarbeitungs- und Steuereinrichtung 90 festgestellt hat, dass sich die Empfangsqualität hinsichtlich der Kombination aus Empfänger 82, Empfangsleitung Rx1 und Sender 132 verschlechtert hat und unter einen vorgegebenen Schwellenwert gesunken ist. Unter Ansprechen auf den ermittelten Qualitätsabfall schreibt die Datenverarbeitungs- und Steuereinrichtung 90 in das Feld 202 des aktuell erzeugten Steuertelegramms beispielsweise eine logische "0", die signalisiert, dass die Empfangsqualität am Empfänger 82 zu schlecht ist. Dieses Steuertelegramm wird vom Sender 81 zum Empfänger 131 des Busteilnehmers 40 übertragen. Die Datenverarbeitungs- und Steuereinrichtung 120 liest das Feld 202 des empfangenen Steuertelegramms aus und erkennt anhand der logischen "0", dass die Verbindung zum benachbarten Busteilnehmer 50 gestört ist. Darauf hin kann die Datenverarbeitungs- und Steuereinrichtung 120 die zweite Schnittstelle 130 schließen. Dadurch, dass regelmäßig Steuertelegramme zwischen den benachbarten Busteilnehmern über unabhängige Kommunikationszyklen ausgetauscht werden können, können die Busteilnehmer sehr schnell Fehler erkennen und auf diese reagieren, um beispielsweise ihre vor einer Fehlerstelle liegende zweite Schnittstelle zu schließen. Der vor der Störquelle liegende Teil des unterlagerten Bussystems 15 kann dann weiter betrieben werden. Dank der dezentralen Überwachung des unterlagerten Bussystems 15 durch unabhängige Kommunikationszyklen zwischen benachbarten Busteilnehmern kann im Fehlerfall das Bussystem 15 schnell umgebaut werden. Die beschriebenen Maßnahmen ermöglichen ferner, dass Busteilnehmer auch im laufenden Betrieb ausgetauscht oder an- bzw. abgeschaltet werden können (Hot-Swapping).

Nunmehr wird ein Szenario betrachtet, bei dem der Busteilnehmer 50 erkennen kann, dass falsche Steuertelegramme vom Busteilnehmer 40 angekommen sind. Wie beschrieben, enthalten Steuertelegramme des Busteilnehmers 40, die zum Busteilnehmer 50 übertragen werden, im fehlerfreien Fall im Feld 201 die Schnittstellenkennung "2" der zweiten Schnittstelle 130. Allerdings enthält nunmehr das zuletzt empfangene Steuertelegramm die Schnittstellenkennung "1" der ersten Schnittstelle 110 des Busteilnehmers 40. Ein solcher Fehler kann auftreten, wenn die Datenverarbeitungs- und Steuereinrichtung 120 defekt ist, ein interner Kurzschluss zum Beispiel zwischen dem Sender 132 und dem Empfänger 131 aufgetreten ist und/oder ein Übersprechen von der Empfangsleitung Rx1 auf die Sendeleitung Tx1 innerhalb einer Schnittstelle erfolgte. Der Busteilnehmer 50 kann auf den erkannten Fehler dadurch reagieren, dass er in das Feld 202 eines weiteren für den Busteilnehmer 40 bestimmten Steuertelegramms eine logische "0" einschreibt, welche auf einen schlechten Empfang hinsichtlich des Empfängers 82 hinweist. Das entsprechende Steuertelegramm wird vom Sender 81 zum Empfänger 131 übertragen. Der Busteilnehmer 40 kann daraufhin wiederum seine zweite Schnittstelleneinrichtung 130 oder auch die erste Schnittstelle 110 schließen. Zusätzlich kann der Busteilnehmer 40 ein Steuertelegramm erzeugen und zum Buskoppler 30 oder einer überlagerten Steuerung (nicht gezeigt) übertragen, um dem Bedienpersonal mitzuteilen, dass der Busteilnehmer 40 defekt ist. In ähnlicher Weise kann jeder Busteilnehmer interne Steuertelegramme zu seinen jeweils benachbarten Busteilnehmern übertragen, um diese anhand der Schnittstellenkennung und einer Information über die Empfangsqualität der jeweiligen Schnittstelle, die mit dem entsprechenden Busteilnehmer kommuniziert, über seinen aktuellen Zustand zu informieren.

Nunmehr sei angenommen, dass die Busteilnehmer über unabhängige Kommunikationszyklen Steuertelegramme austauschen, welche die in Fig. 3c gezeigte Struktur aufweisen können. Allerdings werden die Felder 204, 210 und 212 nicht erzeugt.

Nachfolgend wird wiederum anhand der in Fig. 2 gezeigten unabhängigen Kommunikationszyklen zwischen den Busteilnehmern 40 und 50 sowie 50 und 60 die Funktionsweise erläutert, die für alle Busteilnehmer gilt. Es werden jedoch nur Steuertelegramme betrachtet, die vom Busteilnehmer 40 zum Busteilnehmer 50 sowie vom Busteilnehmer 60 zum Busteilnehmer 50 übertragen werden.

Nunmehr sei angenommen, dass der Busteilnehmer 40 bereits fünf Steuertelegramme, aber noch keine Datentelegramme über den Sender 132 zum Busteilnehmer 50 geschickt hat. Die Anzahl der vom Sender 132 zum Busteilnehmer 50 gesendeten Steuertelegramme werden mittels eines Sendezählers fortlaufend gezählt und in das Feld 205 des entsprechenden Steuertelegramms geschrieben. Ein solcher Sendezähler ist in Fig. 1 am Beispiel des Busteilnehmers 50 gezeigt und mit 93 bezeichnet. Das erste Steuertelegramm trägt somit im Feld 205 die laufende Nummer 1, während das Feld 205 des zuletzt übertragenen fünften Steuertelegramms die Nummer 5 enthält. Angenommen sei ferner, dass die Zustandsinformationsfelder 206 und 207 der fünf bisher zum Busteilnehmer 50 übertragenen Steuerfelder einen Zählerstand "0" enthalten. Das bedeutet, dass der Busteilnehmer 40 alle an seiner ersten Schnittstelle 110 empfangenen Steuertelegramme und alle bisher an seiner zweiten Schnittstelle 130 vom Busteilnehmer 50 empfangenen Steuertelegramme erkannt und zudem keine verfälschten Steuertelegramme empfangen hat. Wie fehlerhaft empfangene Steuertelegramme oder verfälschte Steuertelegramme von einem Busteilnehmer erkannt und gezählt werden können, wird unten i. V. m. dem Busteilnehmer 50 erklärt. Das Zählerstatusfeld 208 der ersten fünf an den Busteilnehmer 50 übertragenen Steuertelegramme enthält die Meldung, dass alle Zähler gültige Werte enthalten. In das Feld 209 jedes zu übertragenden Steuertelegramms trägt der Busteilnehmer 40 die Prüfsumme ein, die über alle Datenfelder, die vor dem Datenfeld 209 liegen, berechnet wird. In das Feld 201 jedes der fünf zum Busteilnehmer 50 übertragenen Steuertelegramme hat der Busteilnehmer 40, bzw. die Datenverarbeitungs- und Steuereinrichtung 120 korrekterweise die Kennung "2" der zweiten Schnittstelle 130 geschrieben. Der Empfangsstatus des Empfängers 131 war während der Übertragung der fünf Steuertelegramme ausreichend, was durch einen entsprechenden Eintrag im Feld 202 jedes der fünf bisher übertragenen Steuertelegramme angezeigt wird. Weiterhin sei angenommen, dass der Busteilnehmer 50 bereits sechs Steuertelegramme, aber noch keine Datentelegramme vom Busteilnehmer 60 empfangen hat. Alle sechs Steuertelegramme enthalten in den Feldern 206, 207 den Zählerstand "0" und in Feld 208 eine Angabe, dass die Zähler gültige Werte liefern. Die vom Sender 142 zum Busteilnehmer 50 gesendeten Steuertelegramme werden mittels eines Sendezählers fortlaufend gezählt. Die entsprechende laufende Nummer wird in das Feld 205 des entsprechenden Steuertelegramms geschrieben. Ein solcher Sendezähler ist in Fig. 1 am Beispiel des Busteilnehmers 50 gezeigt und mit 92 bezeichnet. Das erste gesendete Steuertelegramm erhält somit im Feld 205 die laufende Nummer 1, während das Feld 205 des zuletzt übertragenen sechsten Steuertelegramms die laufende Nummer 6 enthält. In dem Feld 209 ist die jeweilige Prüfsumme eingetragen. In das Feld 201 jedes der sechs zum Busteilnehmer 50 übertragenen Steuertelegramme hat der Busteilnehmer 60, bzw. die Datenverarbeitungs- und Steuereinrichtung 150 korrekterweise die Kennung "1" der ersten Schnittstelle 140 geschrieben. Der Empfangsstatus hinsichtlich der Schnittstelle 140 war während der Übertragung der sechs Steuertelegramme ausreichend, was durch einen entsprechenden Eintrag im Feld 202 jedes der sechs bisher übertragenen Steuertelegramme angezeigt wird. Damit der Busteilnehmer 50 feststellen kann, ob an ihn gerichtete Steuertelegramme nicht erkannt wurden oder verloren gegangenen sind, zählt der Empfangszähler 94 alle am Empfänger 82 ankommenden Steuertelegramme, während der Empfangszähler 91 alle am Empfänger 101 ankommenden Steuertelegramme zählt. Anschließend vergleicht die Datenverarbeitungs- und Steuereinrichtung 90 den Zählerwert der jeweiligen Zähler mit dem im Feld 205 eines Steuertelegramms enthaltenen Zählerwertes. Angenommen sei, dass der Empfangszähler 94 auf dem Wert "4" steht, nachdem er das fünfte Steuertelegramm vom Busteilnehmer 40 empfangen hat. Ferner sei angenommen, dass der Empfangszähler 91 ebenfalls auf dem Wert "4" steht, nachdem er das sechste Steuertelegramm vom Busteilnehmer 60 empfangen hat. Die Datenverarbeitungs- und Steuereinrichtung 90 vergleicht nunmehr die im fünften Steuertelegramm empfangene laufende Nummer "5" mit dem Zählwert des Empfangszählers 94 und die im sechsten Steuertelegramm empfangene laufende Nummer "6" mit dem Zählwert des Empfangszählers 91. Sie stellt folglich fest, dass bisher an der ersten Schnittstelle 80 ein Steuertelegramm und an der zweiten Schnittstelle 100 zwei Steuertelegramme nicht erkannt worden sind. Nicht erkannte Steuer- und/oder Datentelegramme werden fortlaufend hinsichtlich der ersten Schnittstelle in einem ersten Fehlerzähler und hinsichtlich der zweiten Schnittstelle in einem zweiten Fehlerzähler gezählt. Der erste und zweite Fehlerzähler kann Bestandteil der Datenverbeitungs- und Steuereinrichtung sein.

Eine solche Fehlerüberwachung erfolgt in der Regel über einen längeren Zeitraum in jedem am Bussystem 15 angeschlossenen Busteilnehmer, und zwar anhand aller empfangenen und gesendeten Steuer- und/oder Datentelegramme.

Die Datenverarbeitungs- und Steuereinrichtung 90 erzeugt nunmehr zwei Steuertelegramme, von denen das eine zum Busteilnehmer 40 und das andere zum Busteilnehmer 60 übertragen werden soll. Darüber hinaus schreibt sie die Anzahl der hinsichtlich der ersten Schnittstelle 80 nicht erkannten Steuertelegramme in das Feld 206 und Anzahl der hinsichtlich der zweiten Schnittstelle 100 nicht erkannten Steuertelegramme in das Feld 207 der beiden Steuertelegramme.

Zudem kann die Datenverarbeitungs- und Steuereinrichtung 90 des Busteilnehmers 50, alternativ oder zusätzlich, feststellen, ob und wie viele an ihn gerichtete Daten- und/oder Steuertelegramme fehlerhaft erkannt worden sind. Diese Art der Fehlerüberwachung wird in der Regel bevorzugt. Hierzu berechnet die Datenverarbeitungs- und Steuereinrichtung 90 eine Prüfsumme über die vorbestimmten Felder jedes empfangenen Steuertelegramms und vergleicht die berechnete Prüfsumme mit der im Feld 209 des jeweiligen Steuertelegramms stehenden Prüfsumme. Stimmen alle Prüfsummen überein, wurden die von den Busteilnehmern 40 und 60 kommenden Steuertelegramme unverfälscht am Busteilnehmer empfangen. Erkennt die Datenverarbeitungs- und Steuereinrichtung 90 jedoch verfälschte Steuertelegramme, die am Empfänger 82 empfangen wurden, so wird in einem dritten Fehlerzähler, der zum Beispiel in der Datenverarbeitungs- und Steuereinrichtung 90 implementiert ist, der Fehlerwert um eins erhöht. Die Fehlerwerte des ersten und dritten Fehlerzählers werden dann addiert. Die Summe aus beiden Fehlerwerten wird in das der ersten Schnittstelle 80 zugeordnete Feld 206 geschrieben. Erkennt die Datenverarbeitungs- und Steuereinrichtung 90 jedoch beispielsweise ein verfälschtes Steuertelegramm, das am Empfänger 101 empfangen wurde, so wird in einem vierten Fehlerzähler der aktuelle Fehlerwert um eins erhöht. Die Fehlerwerte des zweiten und vierten Fehlerzählers werden addiert. Die Summe aus beiden Fehlerwerten wird in das der zweiten Schnittstelle 100 zugeordnete Feld 207 geschrieben. Der Busteilnehmer 50 ist somit in der Lage, eigene Fehler hinsichtlich der Übertragungsstrecken aus Empfänger 82, Empfangsleitung Rx1 und Sender 132 und aus Empfänger 101, Empfangsleitung Rx2 und Sender 141 zu erkennen.

Ferner wird der Busteilnehmer 50 in den Feldern 206 und 207 von Steuertelegrammen, die er vom Busteilnehmer 40 bzw. vom Busteilnehmer 60 empfängt, über die Anzahl fehlerhaft und/oder oder nicht erkannter Steuertelegramme hinsichtlich der Schnittstellen 110 und 130 des Busteilnehmers 40 bzw. der Schnittstellen 140 und 160 des Busteilnehmers 60 informiert. Dies gilt auch für die anderen Busteilnehmer.

Auf diese Weise kann jeder Busteilnehmer das Verhalten seiner beiden eigenen Schnittstellen und das Verhalten der beiden Schnittstellen seiner benachbarten Busteilnehmer überwachen. Erkennt ein Busteilnehmer eine relative Fehlerhäufung hinsichtlich einer der sechs überwachten Schnittstellen, kann er eine entsprechende Fehlereinformation zu einem beliebigen Zeitung in ein empfangenes Datentelegramm schreiben und über das Bussystem 15 zum Buskoppler 30 zurück übertragen.

Zudem schreibt die Datenverarbeitungs- und Steuereinrichtung 90 im fehlerfreien Fall in das Feld 201 des für den Busteilnehmer 40 bestimmten Steuertelegramms die Kennung "1" für die erste Schnittstelle 80 und in das Feld 201 des für den Busteilnehmer 60 bestimmten Steuertelegramms die Kennung "2" für die zweite Schnittstelle 100. Weiterhin schreibt die Datenverarbeitungs- und Steuereinrichtung 90 in das Feld 202 des für den Busteilnehmer 40 bestimmten Steuertelegramms den Empfangszustand hinsichtlich der Schnittstelle 80 und in das Feld 202 des für den Busteilnehmer 60 bestimmten Steuertelegramms den Empfangszustand hinsichtlich der Schnittstelle 100. Darüber hinaus berechnet die Datenverarbeitungs- und Steuereinrichtung 90 noch die Prüfsumme für das an den Busteilnehmer 40 gerichtete Steuertelegramm und die Prüfsumme für das an den Busteilnehmer 60 gerichtete Telegramm und trägt die Prüfsumme in das Feld 209 des jeweiligen Steuertelegramms ein. Letztendlich wird noch die vom Sendezähler 93 ermittelte laufende Nummer in das Feld 205 des an den Busteilnehmer 60 gerichteten Steuertelegramms und die vom Sendezähler 92 ermittelte laufende Nummer in das Feld 205 des an den Busteilnehmer 40 gerichteten Steuertelegramms geschrieben. In unabhängigen Kommunikationszyklen überträgt der Busteilnehmer 50 schließlich das an den Busteilnehmer 40 gerichtete Steuertelegramm über den Sender 81 zum Empfänger 131 und das an den Busteilnehmer 60 gerichtete Steuertelegramm über den Sender 102 zum Empfänger 142. Die Busteilnehmer 40 und 60 können dann die empfangenen Steuerfelder in der zuvor beschriebenen Weise auswerten und weitere Steuertelegramme zum Busteilnehmer 50 übertragen und von diesem empfangen.

Die in den Steuertelegrammen gemäß Fig. 3c oder 3d verwendete Startkennung weist ein Bitmuster auf, welches jedem Busteilnehmer ermöglicht, sich zu synchronisieren.

Noch einmal sei erwähnt, dass die Felder der in Fig. 3c und 3d gezeigten Steuertelegramme nur Beispiele sind und zudem beliebig kombiniert und entfernt werden können. Die Felder der Steuertelegramme können jeweils ein Bit, mehrere Bits oder sogar mehrere Bytes aufnehmen.

### 2. Unterbrechung der Übertragung von Steuertelegrammen in lokalen unabhängigen Kommunikationszyklen

Nunmehr sei angenommen, dass am Buskoppler wenigstens ein Ethernet-Telegramm angekommen ist, dessen Nutzdaten über das interne Bussystem 15 übertragen werden sollen.

Wie bereits weiter oben geschildert, wird das in Fig. 3a gezeigte Ethernet-Telegramm 170 vom Telegramm-Umsetzer 33 beispielsweise in das in Fig. 3b gezeigte interne Datentelegramm 180 umgesetzt. Gemäß einer bevorzugten Ausführungsvariante werden vom Telegrammumsetzer 33 lediglich die Nutzdaten des Ethernet-Telegramms in das Datenfeld 211 des internen Datentelegramms 180 eingefügt. Die übrigen Felder der in Fig. 3b beispielhaft gezeigten Telegrammstruktur werden wie folgt vom Buskoppler 30 beschrieben:
- In das Feld 200 wird die in Fig. 3b dargestellte Startkennung geschrieben.
- Die Felder 201 und 202 werden nur von den Busteilnehmern beschrieben.
- Das Feld 203 enthält zum Beispiel Angaben über die Anzahl der Felder und deren Inhalt, den Typ des angeschlossenen externen Netzwerks 20 und des unterlagerten Bussystems 15.
- In das Feld 204 schreibt der Buskoppler 30 die laufende Nummer der tatsächlich über das unterlagerte Bussystem 15 übertragenen internen Datentelegramme. Im vorliegenden Beispiel enthält das Feld 204 die Nummer 1.
- Die Felder 205 bis 208 werden nur von den Busteilnehmern beschrieben.
- In das Feld 209 schreibt der Buskoppler 30 die Prüfsumme.
- Das Feld 210 wird von den Busteilnehmern beschrieben, wenn Daten- oder Steuertelegramme durchgeleitet werden.
- Das Feld 212 enthält eine vorgegebene Stoppkennung.

Werden vom Buskoppler 30 weitere Ethernet-Telegramme empfangen, so können diese Ethernet-Telegramme in ähnlicher Weise jeweils in ein internes Datentelegramm umgesetzt werden, das in Feld 204 die aktuelle laufende Nummer der tatsächlich übertragenen Daten- und/oder Steuertelegramme und in Feld 209 die entsprechende Prüfsumme enthält.

Damit die Nutzdaten vom Buskoppler 30 mit einem kleinen Jitter in Echtzeit über das unterlagerten Bussystem 15 übertragen werden können, wird eine Startkennung verwendet, die es ermöglicht, dass die Übertragung von Steuertelegrammen zwischen benachbarten Busteilnehmern in sehr kurzer Zeit, vorzugsweise innerhalb einer Bit-Dauer unterbrochen oder beendet werden kann. Hierzu werden beispielsweise die in Fig. 4a und 4b gezeigten Startkennungen verwendet.

Das erste vom Buskoppler 30 erzeugte interne Datentelegramm wird nunmehr über den Sender 34 zum Empfänger 112 des ersten Busteilnehmers 40 übertragen. Die Datenverarbeitungs- und Steuereinrichtung 120, wie auch die Datenverarbeitungs- und Steuereinrichtung der anderen Busteilnehmers sind dazu ausgebildet, die Startkennung der Steuertelegramme und die Startkennung eines empfangenen Datentelegramms zu unterscheiden. Nachdem die Datenverarbeitungs- und Steuereinrichtung 120 des Busteilnehmers 40 das dritte Startbit der Startkennung des empfangenen Datentelegramms ausgewertet hat, weiß sie, dass ein Datentelegramm angekommen ist. Sie beendet daraufhin die Erzeugung und Übertragung von Steuertelegrammen zum Busteilnehmer 50. Gleichzeitig beginnt sie, die für den Busteilnehmer 40 bestimmten Nutzdaten aus dem ihr zugewiesenen Datenblock des Feldes 211 auszulesen, eigene Nutzdaten in den Datenblock einzuschreiben und teilnehmerbezogene Zustandsinformationen in der zuvor beschriebenen Art und Weise in die Felder 201, 202 und 205 bis 209 zu schreiben. Anhand der im Feld 209 übertragenen Prüfsumme kann sie, wie oben bereits in Verbindung mit dem Busteilnehmer 50 erläutert, prüfen, ob und wie viele verfälschte Datentelegramme am Empfänger 112 angekommen sind. Der Busteilnehmer 40 addiert intern wiederum laufend die hinsichtlich der ersten Schnittstelle 110 fehlerhaft und nicht erkannten Steuer- und/oder Datentelegramme. Im Busteilnehmer 40 ist somit immer ein aktueller Wert gespeichert, der angibt, wie viele fehlerhaft erkannte und nicht erkannte Steuer- und Datentelegramme bisher ermittelt worden sind. Die entsprechende Summe hinsichtlich der ersten Schnittstelle wird in das Feld 206 eines Datentelegramms geschrieben und zum Buskoppler 30 übertragen.

In entsprechender Weise wird die aktuelle Zahl bezüglich der zweiten Schnittstelle 130 ermittelt, die angibt, wie viele fehlerhaft erkannte und nicht erkannte Steuer- und/oder Datentelegramme bisher ermittelt worden sind. Diese Summe wird in das Feld 207 eines Datentelegramms geschrieben. Zudem trägt die Datenverarbeitungs- und Steuereinrichtung 120 die Nummer "1" in das Feld 205, die anzeigt, dass der Sender 132 das erste Datentelegramm übertragen wird. Mit Beginn des dritten Startbits kann die datenverarbeitungs- und Steuereinrichtung 120 mit der Verarbeitung des empfangenen Datentelegramms beginnen. Dank der in den Fig. 4a bis 4b gezeigten Startkennungen ist es somit möglich, Steuertelegramme nicht nur jederzeit unterbrechen oder beenden zu können, sondern auch die Übertragung von Nutzdaten in internen Datentelegrammen Bitgenau zu beginnen. Darüber hinaus sind die Startkennungen derart gewählt, dass mehr als ein Bitfehler auftreten muss, um die Startkennung eines Datentelegramms in die Startkennung eines Steuertelegramms oder umgekehrt zu verfälschen.

Das teilnehmerbezogene Zustandsinformationen enthaltende Datentelegramm wird nunmehr vom Sender 132 zum Empfänger 82 des Busteilnehmers 50 übertragen. Die Datenverarbeitungs- und Steuereinrichtung 90 erkennt, wie zuvor die Datenverarbeitungseinrichtung 120 des Busteilnehmers 40, innerhalb der ersten drei Startbits, dass ein Datentelegramm angekommen ist. Sie beendet daraufhin die Erzeugung und Übertragung von Steuertelegrammen zum Busteilnehmer 60. Zudem kann sie bereits jetzt auch die Erzeugung und Übertragung von Steuertelegrammen zum Busteilnehmer 40 unterbrechen oder beenden. Allerdings kann alternativ die Erzeugung und Übertragung von Steuertelegrammen zum Busteilnehmer 40 auch dann unterbrochen oder beendet werden, wenn das Datentelegramm nach einem Umlauf vom Busteilnehmer 60 zum Busteilnehmer 50 übertragen worden ist. Gleichzeitig beginnt die Datenverarbeitungs- und Steuereinrichtung 90 damit, die für den Busteilnehmer 50 bestimmten Nutzdaten aus dem ihr zugewiesenen Datenblock des Feld 211 auszulesen, eigene Nutzdaten in den Datenblock einzuschreiben und die Zustandsinformationen des Busteilnehmers 40 aus den Felder 201, 202 und 205 bis 210 zu den oben bereits geschilderten Prüfzwecken auszulesen und gegebenenfalls auszuwerten und zu verarbeiten. In das Feld 210 schreibt ein Busteilnehmer eine Information, die auf einen Fehler in dem aktuellen Steuer- und/oder Datentelegramm hinweist. Diese Felder können anschließend mit Zustandsinformationen des Busteilnehmers 50 überschrieben. Da die vom Busteilnehmer 40 empfangenen Datentelegramme nur über den Sender 102 der zweiten Schnittstelle 100 übertragen werden, wird im fehlerfreien Fall die Kennung "2" in das Feld 201 geschrieben. In das Feld 202 schreibt die Datenverarbeitungs- und Steuereinrichtung 90 die Empfangsqualität hinsichtlich der Kombination aus Empfänger 101, Empfangsleitung Rx2 und Sender 141. Auch der im Feld 204 enthaltene Zählerstand des Telegrammzählers 32 des Buskopplers 30 kann von der Datenverarbeitungs- und Steuereinrichtung 90 ausgelesen werden.

Nachdem das Datentelegramm vollständig aktualisiert worden ist, überträgt der Sender 102 das Datentelegramm zum Empfänger 142 des Busteilnehmers 60, der das empfangene Datentelegramm in der zuvor beschriebenen Weise auswertet, aktualisiert und zum Busteilnehmer 70 weiterleitet.

Angemerkt sei, dass der Busteilnehmer 50 in das oder ein bestimmtes Datentelegramm auch eine Fehlerinformation schreiben kann, wenn, in der Regel über einen längeren Zeitraum, hinsichtlich einer seiner überwachten Schnittstellen 80 oder 100 eine relativ hohe Anzahl an fehlerhaft oder nicht erkannten Steuer- und/oder Datentelegrammen bezüglich der zusätzlich überwachten Schnittstellen 110, 130, 140 oder 160 ermittelt worden ist. Diese Fehlerinformation wird zum Buskoppler 30 übertragen.

Der Busteilnehmer 70 schließt das ringförmige Bussystem 15 ab. Auf die zuvor beschriebene Weise wird das Datentelegramm vom Busteilnehmer 70 zum Empfänger 161 des Busteilnehmers 60 zurückgeschickt, dann über den Sender 141 zum Empfänger 101 des Busteilnehmers 50 und schließlich über den Busteilnehmer 40 zurück zum Buskoppler 30 übertragen. Auf diese Weise kann jeder Busteilnehmer dezentral und autark den Buskoppler 30 über den Zustand der jeweils von ihm überwachten Schnittstellen, das sind seine eigenen Schnittstellen und die seiner benachbarten Busteilnehmer, informiert halten. Dadurch wird das Wartungspersonal in die Lage versetzt, einen mangelhaft arbeitenden Busteilnehmer zu erkennen, so dass dieser rechtzeitig vor seinem vollständigen Ausfall ausgetauscht werden kann.

Angemerkt sei noch, dass bei der Rückübertragung des Datentelegramms jeder Busteilnehmer im fehlerfreien Fall anstelle der Kennung "2" die Kennung "1" für die erste Schnittstelle in das Feld 201 und die Empfangsqualität einer Übertragungsstrecke aus Empfänger, Sendeleitung und Sender der entsprechenden ersten Schnittstelle in das Feld 202 einträgt. Denn das Datentelegramm wird vom Sender der jeweiligen ersten Schnittstelle zum benachbarten Busteilnehmer zurück übertragen. Solange Nutzdaten am Buskoppler 30 vorliegen, die über das unterlagerte Bussystem 15 übertragen werden sollen, werden Datentelegramme in der beschriebenen Weise über die Busteilenehmer weitergeleitet, gezählt und ausgewertet.

Auf diese Weise kann jeder Busteilnehmer neben Nutzdaten auch Zustandsinformationen eines benachbarten Busteilnehmers in den Datentelegrammen empfangen und seine eigenen Zustandsinformationen in den Datentelegrammen an seine benachbarten Busteilnehmer senden. Folglich kann das unterlagerte Bussystem 15 auch während der Übertragung von Nutzdaten dezentral und autark durch die angeschlossenen Busteilnehmer 40 bis 70 überwacht und diagnostiziert werden.

Eigene Fehler und Fehler in benachbarten Busteilnehmern kann jeder Busteilnehmer in der oben beschriebenen Weise erkennen. Auch die Reaktion der Busteilnehmer auf erkannte Fehler kann in der dort erläuterten Weise erfolgen.

Bei der Übertragung von Nutzdaten werden Datentelegramme üblicherweise in einem festen zeitlichen Raster vom Buskoppler 30 gesendet. Jeder Busteilnehmer, vorzugsweise die jeweilige Datenverarbeitungs- und Steuereinrichtung kann demzufolge dazu ausgebildet sein, zu errechnen, wie viele Datentelegramme pro Zeiteinheit empfangen werden müssten. Anhand des in Feld 204 übertragenen Sendezählerwertes, der angibt wie viele Datentelegramm vom Buskoppler übertragen worden sind, kann jeder Busteilnehmer selbst bereits erkennen, ob Datentelegramme im überlagerten Netzwerk, im Buskoppler oder im unterlagerten Bussystem 15 verloren gegangen sind.

Stellen die Busteilnehmer 40 bis 70 nunmehr fest, dass innerhalb einer einstellbaren Zeit keine Datentelegramme mehr ankommen, können sie erneut beginnen, Steuertelegramme zu erzeugen und mit benachbarten Busteilnehmern in der zuvor beschriebenen Art und Weise auszutauschen, um eine dezentrale und autarke Überwachung des unterlagerten Bussystems aufrecht zu erhalten. Alternativ können sie auch über ein entsprechendes Daten- oder Steuertelegramm vom Buskoppler 30 darüber informiert werden, dass keine Nutzdaten mehr übertragen werden. Eine Rücksetzung der Sende-, Empfangs- und Fehlerzähler der Busteilnehmer erfolgt nicht.

### 3. Übertragung von vom Buskoppler bereitgestellten Steuertelegrammen

Der Buskoppler 30 kann beispielsweise die in den Fig. 3c und 3d gezeigten Steuertelegramme erzeugen und dem unterlagerten Bussystem 15 zuführen, wenn keine Nutzdaten zur Verfügung stehen. In diesem Fall werden die Steuertelegramme nicht in unabhängigen Kommunikationszyklen zwischen benachbarten Busteilnehmern, wie dies in Fig. 2 dargestellt ist, ausgetauscht. Vielmehr werden die vom Buskoppler 30 erzeugten Steuertelegramme, wie zuvor die Datentelegrammen, von Busteilnehmer zu Busteilnehmer und schließlich weitergereicht und zum Buskoppler 30 zurück übertragen, nachdem sie in der zuvor beschriebenen Weise ausgewertet und durch teilnehmerbezogene Zustandsinformationen aktualisiert worden sind.

Insbesondere wird das erste vom Buskoppler 30 erzeugte interne Steuertelegramm mit der in Fig. 3c gezeigten Struktur über den Sender 34 zum Empfänger 112 des ersten Busteilnehmers 40 übertragen. Angemerkt sei, dass das Steuertelegramm in diesem Fall einem Datentelegramm ohne Datenfeld 211 entsprechen kann.

Wichtig ist anzumerken, dass die in Fig. 4a dargestellte Startkennung eines Datentelegramms in zwei Bitmuster, zum Beispiel "0010" und "000" unterteilt sein kann. Die Datenverarbeitungs- und Steuereinrichtung 120, wie auch die Datenverarbeitungs- und Steuereinrichtung der anderen Busteilnehmer sind dazu ausgebildet, bereits anhand des ersten Bitmusters die Startkennung eines Datentelegramms zu erkennen. Das zweite Bitmuster wird verwendet, um mögliche Bitfehler zu erkennen. Erkennt eine Datenverarbeitungs- und Steuereinrichtung anhand des zweiten Bitmusters eine fehlerhafte Startkennung, wird die weitere Verarbeitung und Übertragung des entsprechenden Datentelegramms verhindert.

Nachdem die Datenverarbeitungs- und Steuereinrichtung 120 des Busteilnehmers 40 das erste Bitmuster korrekt erkannt hat, weiß sie, dass ein Steuertelegramm angekommen ist. Sie beginnt daraufhin, teilnehmerbezogene Zustandsinformationen in der zuvor beschriebenen Art und Weise in die Felder 201, 202 und 205 bis 210 zu schreiben. Insbesondere kann die Datenverarbeitungs- und Steuereinrichtung 120 anhand der im Feld 204 enthaltenen laufenden Nummer prüfen, ob am Empfänger 112 angekommene Steuertelegramme nicht erkannt worden sind. Anhand der im Feld 209 übertragenen Prüfsumme kann sie, wie oben bereits in Verbindung mit dem Busteilnehmer 50 erläutert, prüfen, ob am Empfänger 112 verfälschte Steuertelegramme angekommen sind. Die aktuelle Anzahl fehlerhaft erkannter und/oder nicht erkannter Steuertelegramme wird hinsichtlich der ersten Schnittstelle in das Feld 206 geschrieben. In entsprechender Weise wird die aktuelle Anzahl fehlerhaft erkannter und/oder nicht erkannter Steuertelegramme hinsichtlich der zweiten Schnittstelle in das Feld 207 geschrieben. Zudem trägt die Datenverarbeitungs- und Steuereinrichtung 120 die Nummer "1" in das Feld 205, die anzeigt, dass der Sender 132 das erste Datentelegramm übertragen wird. Die Datenverarbeitungs- und Steuereinrichtung 120 kann bereits nach dem Erkennen des ersten Bitmusters der Startkennung den Sender 132 veranlassen, das empfangene Steuertelegramm zum Busteilnehmer 50 zu übertragen.

Darüber hinaus ist die Startkennung derart gewählt, dass mehr als ein Bitfehler auftreten muss, um die Startkennung eines Datentelegramms in die Startkennung eines Steuertelegramms und umgekehrt zu verfälschen.

Das teilnehmerbezogene Zustandsinformationen enthaltende Steuertelegramm wird nunmehr vom Sender 132 zum Empfänger 82 des Busteilnehmers 50 übertragen. Die Datenverarbeitungs- und Steuereinrichtung 90 erkennt, wie zuvor die Datenverarbeitungseinrichtung 120 des Busteilnehmers 40 bereits anhand des ersten Bitmusters der empfangenen Startkennung, dass ein Steuertelegramm angekommen ist. Die Datenverarbeitungs- und Steuereinrichtung 90 beginnt nunmehr damit, die Zustandsinformationen des Busteilnehmers 40 aus den Felder 201, 202 und 205 bis 210 zu den oben bereits geschilderten Prüfzwecken auszulesen und gegebenenfalls auszuwerten, zu speichern und/oder zu verarbeiten. Diese Felder werden anschließend mit Zustandsinformationen des Busteilnehmers 50 überschrieben. Da das vom Busteilnehmer 40 empfangene Steuertelegramme nur über den Sender 102 der zweiten Schnittstelle 100 übertragen werden, wird im fehlerfreien Fall die Kennung "2" in das Feld 201 geschrieben. In das Feld 202 schreibt die Datenverarbeitungs- und Steuereinrichtung 90 die Empfangsqualität des Empfängers 101. Auch der in Feld 204 enthaltene Zählerstand des Telegrammzählers 32 des Buskopplers 30 kann von der Datenverarbeitungs- und Steuereinrichtung 90 ausgelesen werden.

Noch einmal sei betont, dass jeder Busteilnehmer über einen längeren Zeitraum hinweg, also während der Übertragung von Millionen von Steuer- und/oder Datentelegrammen, seine Schnittstellen und die Schnittstellen seiner benachbarten Busteilnehmer überwacht, indem er die Anzahl fehlerhaft erkannter und/oder nicht erkannter Steuer- und/oder Datentelegramme ermittelt. Stellt ein Busteilnehmer zum Beispiel fest, dass die Anzahl fehlerhaft und/oder nicht erkannter Steuertelegramme bezüglich einer seiner beiden Schnittstellen im Verhältnis zu den Schnittstellen seiner benachbarten Busteilnehmer erheblich angewachsen ist, kann er eine entsprechende Fehlermeldung in einem Datentelegramm zum Buskoppler 30 übertragen.

Nachdem das Steuertelegramm vollständig aktualisiert worden ist, überträgt der Sender 102 das Steuertelegramm zum Empfänger 142 des Busteilnehmers 60, der das empfangene Steuertelegramm in der zuvor beschriebenen Weise auswertet, aktualisiert und zum Busteilnehmer 70 weiterleitet. Der Busteilnehmer 70 schließt das ringförmige Bussystem 15 ab. Auf die zuvor beschriebene Weise wird das Steuertelegramm vom Busteilnehmer 70 zum Empfänger 161 des Busteilnehmers 60 zurückgeschickt, dann über den Sender 141 zum Empfänger 101 des Busteilnehmers 50 und schließlich über den Busteilnehmer 40 zurück zum Buskoppler 30 übertragen.

Angemerkt sei noch, dass bei der Rückübertragung des Steuertelegramms jeder Busteilnehmer im fehlerfreien Fall anstelle der Kennung "2" die Kennung "1" für die erste Schnittstelle in das Feld 201 und die Empfangsqualität des Empfängers der entsprechenden ersten Schnittstelle in das Feld 202 einträgt. Denn das Steuertelegramm wird vom Sender der jeweiligen ersten Schnittstelle zum benachbarten Busteilnehmer zurück übertragen. Solange keine Nutzdaten am Buskoppler vorliegen, die über das unterlagerte Bussystem 15 übertragen werden sollen, werden Steuertelegramme in der beschriebenen Weise über die Busteilenehmer weitergeleitet, ausgewertet und/oder verarbeitet.

Auf diese Weise kann das unterlagerte Bussystem 15 dezentral und autark durch die angeschlossenen Busteilnehmer 40 bis 70 überwacht und diagnostiziert werden, auch wenn keine Nutzdaten übertragen werden.

Eigene Fehler und Fehler in benachbarten Busteilnehmern kann jeder Busteilnehmer in der Weise erkennen, die oben in den 1. und 2. Abschnitten geschildert wurden. Auch die Reaktion der Busteilnehmer auf erkannte Fehler kann in der dort erläuterten Weise erfolgen.

Angemerkt sei an dieser Stelle, dass jeder Busteilnehmer gegebenenfalls eine Fehlermeldung in das Feld 208 eines Steuertelegramms oder Datentelegramms schreiben kann. Diese Meldung zeigt an, dass möglicherweise die Sendezähler und Empfangszähler nicht ordnungsgemäß aktualisiert werden konnten, da beispielsweise die Versorgungsspannung des jeweiligen Busteilnehmers unterbrochen oder der Busteilnehmer neu gestartet worden ist.

Anstatt Steuertelegramme mit der in Fig. 3c gezeigten Struktur zu erzeugen, kann der Buskoppler 30 auch verkürzte Steuertelegramme, wie in Fig. 3d dargestellt, erzeugen und über das unterlagerte Bussystem 15 übertragen. In diesem Fall werden lediglich die beiden Felder 201 und 202, welche eine Schnittstellenkennung bzw. eine Information über die jeweilige Empfangsqualität eines Busteilnehmers enthalten, von den Busteilnehmern ausgelesen und überschrieben. Bei der Übertragung der Steuertelegrame vom Buskoppler zum Busteilnehmer 70 schreibt jeder Busteilnehmer im fehlerfreien Fall die Kennung "2" der zweiten Schnittstelle in das Feld 201 sowie die Empfangsqualität des Empfängers der zweiten Schnittstelle in das Feld 202 des jeweiligen Steuertelegramms, während bei der Übertragung der Steuertelegramme vom Busteilnehmer 70 zurück zum Buskoppler 30 jeder Busteilnehmer im fehlerfreien Fall die Kennung "1" der ersten Schnittstelle in das Feld 201 sowie die Empfangsqualität des Empfängers der ersten Schnittstelle in das Feld 202 des jeweiligen Steuertelegramms schreibt. Die Auswertung der Zustandsinformationen in den Feldern 201 und 202 und die Systemreaktion auf die Auswertung erfolgt in der oben bereits erläuterten Weise.

### 4. Unterbrechung der Übertragung von vom Buskoppler bereitgestellten Steuertelegrammen

Die Übertragung von Steuertelegrammen über das unterlagerte Bussystem 15, die vom Buskoppler 30 eingeleitet wird, kann in definierter Weise und schnell unterbrochen oder beendet werden, wenn Ethernet-bezogene Telegramme über das Netzwerk 20 am Buskoppler 30 ankommen, deren Nutzdaten dem unterlagerten Bussystem 15 übergeben werden sollen. Eine bitgenaue Übertragung von Datentelegrammen wird wiederum durch die Verwendung geeigneter, unterschiedlicher Startkennungen für Datentelegramme und Steuertelegramme ermöglicht.

Soll die Übertragung der in Fig. 3c und 3d gezeigten Steuertelegramme unterbrochen oder beendet werden können, so sind die einzelnen Bits der Nutzinformationsfelder (201 bis 210 bzw. 201 und 202) durch feste Bitfolgen oder einzelne Bits getrennt. Diese Maßnahme verhindert, dass aus einem unterbrochenen Steuertelegramm irrtümlich eine gültige Startkennung eines Datentelegramms entstehen kann.

Zunächst sei angenommen, dass der Buskoppler 30 keine Steuertelegramme mehr erzeugt, sobald er ein Ethernet-Telegramm erhalten hat.

Wie bereits weiter oben geschildert, wird das in Fig. 3a gezeigte Ethernet-Telegramm 170 vom Telegramm-Umsetzer 33 beispielsweise in das in Fig. 3b gezeigte interne Datentelegramm 180 umgesetzt. Gemäß einer bevorzugten Ausführungsvariante werden vom Telegrammumsetzer 33 lediglich die Nutzdaten des Ethernet-Telegramms in das Datenfeld 211 des internen Datentelegramms 180 eingefügt. Weitere Daten werden in zweckmäßiger Weise nicht übernommen.

Werden vom Buskoppler 30 weitere Ethernet-Telegramme empfangen, so können diese Ethernet-Telegramme in ähnlicher Weise jeweils in ein internes Datentelegramm umgesetzt werden. Feld 204 enthält dann die aktuelle laufende Nummer, Feld 209 die entsprechend berechnete Prüfsumme und Feld 211 die zu übertragenden Nutzdaten des jeweiligen Ethernet-Telegramms.

Damit die Nutzdaten vom Buskoppler 30 mit einem kleinen Jitter in Echtzeit über das unterlagerten Bussystem 15 übertragen werden können, wird wiederum eine Startkennung verwendet, die es ermöglicht, dass die Übertragung von Steuertelegrammen zwischen benachbarten Busteilnehmern in sehr kurzer Zeit, vorzugsweise innerhalb einer Bit-Dauer unterbrochen oder beendet werden kann. Hierzu wird beispielsweise die in Fig. 4a gezeigte Startkennung verwendet.

Das erste vom Buskoppler erzeugte interne Datentelegramm wird nunmehr über den Sender 34 zum Empfänger 112 des ersten Busteilnehmers 40 übertragen. Die Datenverarbeitungs- und Steuereinrichtung 120, wie auch die Datenverarbeitungs- und Steuereinrichtung der anderen Busteilnehmers sind dazu ausgebildet, die Startkennung der Steuertelegramme und die Startkennung eines empfangenen Datentelegramms zu unterscheiden. Nachdem die Datenverarbeitungs- und Steuereinrichtung 120 des Busteilnehmers 40 das zweite Startbit der Startkennung des empfangenen Datentelegramms ausgewertet hat, weiß sie, dass ein Datentelegramm angekommen ist. Sie beendet daraufhin mit dem nächsten empfangenen Startbit die Übertragung von Steuertelegrammen zum Busteilnehmer 50. In ähnlicher Weise reagieren die übrigen Busteilnehmer bei der Auswertung der Startkennung des ersten empfangenen Datentelegramms.

Der weitere Verfahrensablauf entspricht dem im Abschnitt 2. "Unterbrechung der Übertragung von Steuertelegrammen in lokalen unabhängigen Kommunikationszyklen" geschilderten Ablauf.

## Patentansprüche

1. Kommunikationssystem (10) mit
einem externen Netzwerk (20) und mit einem Buskoppler (30) mit einer externen Schnittstelle zur Anbindung an ein externes Netzwerk (20), auf dem netzwerkspezifische Telegramme übertragen werden können,
einer internen Schnittstelle (34, 35) zur Anbindung einer Mehrzahl von Busteilnehmern (40-70) in Reihe an einen ringförmigen Übertragungsweg eines unterlagerten Bussystems (15), und
einer Umsetzungseinrichtung (33), welche derart ausgebildet ist, dass sie ein über die externe Schnittstelle empfangenes netzwerkspezifisches Telegramm (170) in ein internes Datentelegramm (180) zur Übertragung über den ringförmigen Übertragungsweg umsetzen kann, welches keine Steuerdaten des netzwerkspezifischen Telegramms enthält, wobei das interne Datentelegramm (180) an die interne Schnittstelle (34) weitergeleitet und auf den ringförmigen Übertragungsweg ausgegeben wird, wobei das interne Datentelegramm wenigstens ein Zustandsinformationsfeld (201) für interne Steuerinformationen enthält, wobei jeder an die interne Schnittstelle (34, 35) angeschlossene Busteilnehmer (40-70) bei Durchlauf des internen Datentelegramms auf den ringförmigen Übertragungsweg durch den entsprechenden Busteilnehmer die für den Busteilnehmer bestimmten Nutzdaten mit dem auf dem Übertragungsweg umlaufenden internen Datentelegramm (180) austauscht, wobei der Busteilnehmer derart ausgebildet ist, dass er Nutzdaten aus einem dem Busteilnehmer zugeordneten Datenblock im Datenfeld (211) des internen Datentelegramms (180) und interne Steuerinformationen aus dem wenigstens einen Zustandsinformationsfeld (201) des internen Datentelegramms (180) entnehmen und seinerseits Nutzdaten in den dem Busteilnehmer zugeordneten Datenblock des Datenfeldes des internen Datentelegramms sowie seine interne Steuerinformationen in das wenigstens eine Zustandsinformationsfeld (201) des internen Datentelegramms (180) einfügen kann,
und einer Mehrzahl von Busteilnehmern (40-70), die in Reihe über einen ringförmigen Übertragungsweg an die interne Schnittstelle des Buskopplers angeschlossen sind, wobei die Busteilnehmer (40-70) jeweils ausgelegt sind, die auf dem ringförmigen Übertragungsweg durchlaufenden internen Datentelegramme (180) zu interpretieren und einen Datenaustausch vorzunehmen, und wobei jeder Busteilnehmer (50) folgende Merkmale aufweist:
eine erste Schnittstelle (80) mit einer ersten Sende- und Empfangseinrichtung (81, 82) zum Senden und Empfangen von internen Daten- oder Steuertelegrammen zu bzw. von einem ersten benachbarten Busteilnehmer (40) und
eine zweite Schnittstelle (100) mit einer zweiten Sende- und Empfangseinrichtung (101, 102) zum Senden und Empfangen von internen Daten- oder Steuertelegrammen zu bzw. von einem zweiten benachbarten Busteilnehmer (60), und wobei jeder Busteilnehmer (50) eine Einrichtung (90) zum Erzeugen von internen Steuertelegrammen aufweist, welche jeweils ein Startkennungs-Feld (195) für eine das interne Steuertelegramm identifizierende Startkennung und wenigstens ein Zustandsinformationsfeld (201, 202) für busteilnehmerbezogene Zustandsinformationen enthalten, wobei die vom jeweiligen Busteilnehmer (50) erzeugten internen Steuertelegramme nur zu seinem benachbarten ersten und/oder zweiten Busteilnehmern (40, 60) übertragen werden.

2. Kommunikationssystem nach Anspruch 1,
**dadurch gekennzeichnet, dass**
der ersten und zweiten Schnittstelle (80, 100) jedes Busteilnehmers jeweils eine Schnittstellen-Kennung zugeordnet sind, dass die internen Daten- und/oder Steuertelegrammen jeweils ein weiteres Zustandsinformationsfeld (201) für eine Schnittstellenkennung enthalten, wobei jeder Busteilnehmer eine Einrichtung (90) zum Auslesen einer Schnittstellenkennung aus und zum Einschreiben einer Schnittstellenkennung in das weitere Zustandsinformationsfeld (201) aufweist.

3. Kommunikationssystem nach Anspruch 1,
**dadurch gekennzeichnet, dass**
jeder Busteilnehmer (50) eine Einrichtung zum Ermitteln der Empfangsqualität der ersten und zweiten Schnittstelle (80, 100) aufweist,
dass die internen Daten- und/oder Steuertelegramme jeweils ein weiteres Zustandsinformationsfeld für eine Empfangs-Zustandsinformation (202) enthalten, wobei jeder Busteilnehmer eine Einrichtung zum Auslesen einer Empfangs-Zustandsinformation aus und zum Einschreiben einer Empfangs-Zustandsinformation in das weitere Zustandsinformationsfeld aufweist.

4. Kommunikationssystem nach einem der Ansprüche 1 bis 3,
**dadurch gekennzeichnet, dass**
jeder Busteilnehmer (50) eine Einrichtung (90) aufweist, die derart ausgebildet ist, dass sie unter Ansprechen auf wenigstens eine in einem internen Daten- oder Steuertelegramm enthaltene Empfangszustandsinformation die jeweilige erste oder zweite Schnittstelle schließt.

5. Kommunikationssystem nach einem der Ansprüche 1 bis 4,
**dadurch gekennzeichnet, dass**
jeder Busteilnehmer (50) eine Einrichtung (90) aufweist, die derart ausgebildet ist, dass sie unter Ansprechen auf die in einem empfangenen internen Datentelegramm enthaltene Startkennung (200) die Erzeugung und/oder Übertragung interner Steuertelegramme (190, 220) in definierter Weise unterbricht oder beendet, so dass eine Übertragung des internen Datentelegramms (180) in Echtzeit erfolgt.

6. Kommunikationssystem nach einem der Ansprüche 1 bis 5,
**dadurch gekennzeichnet, dass**
die ein internes Daten- oder Steuertelegramm identifizierende Startkennung ein Bitmuster enthält, welches zur Synchronisation des jeweiligen Busteilnehmers verwendet werden kann.

7. Kommunikationssystem nach einem der Ansprüche 1 bis 6,
**dadurch gekennzeichnet, dass**
die ein internes Datentelegramm identifizierende Startkennung (200) und die ein Steuertelegramm identifizierende Startkennung (195) jeweils ein unterschiedliches Bitmuster enthalten, derart, dass die Übertragung von internen Steuertelegrammen in definierter Weise, insbesondere innerhalb einer Bitdauer, unterbrochen oder beendet wird.

8. Kommunikationssystem nach einem der Ansprüche 1 bis 7,
**dadurch gekennzeichnet, dass**
die ein internes Datentelegramm identifizierende Startkennung und/oder die ein Steuertelegramm identifizierende Startkennung jeweils ein erstes und zweites Bitmuster enthalten, wobei jeder Busteilnehmer derart ausgebildet ist, dass er eine empfangene Startkennung bereits durch das erste Bitmuster erkennt.

9. Kommunikationssystem nach einem der Ansprüche 1 bis 8,
**dadurch gekennzeichnet, dass**
das interne Steuertelegramm ein Datenfeld zur Übertragung von sicherheitsrelevanten Daten enthält, und dass
der Buskoppler und/oder jeder Busteilnehmer zum Auslesen von sicherheitsrelevanten Daten aus dem Datenfeld und zum Schreiben von sicherheitsrelevanten Daten in das Datenfeld ausgebildet sind.

10. Kommunikationssystem nach einem der Ansprüche 2 bis 9,
**dadurch gekennzeichnet, dass**
jeder Busteilnehmer (50) eine der ersten und zweiten Schnittstelle (80, 100) zugeordnete Fehlererkennungseinrichtung (90) zum Erfassen von internen Daten- und/oder Steuertelegrammen, welche an der ersten und/oder zweiten Schnittstelle fehlerhaft empfangenen und/oder nicht erkannt worden sind, wobei die internen Daten- und/oder Steuertelegramme jeweils zwei weitere Zustandsinformationsfelder (206, 207) enthalten, in die das jeweilige Ergebnis der Fehlererkennungseinrichtung geschrieben werden kann.

11. Kommunikationssystem nach Anspruch 10,
**dadurch gekennzeichnet, dass**
die Fehlererkennungseinrichtung eine erste, der ersten und zweiten Schnittstelle (80, 100) zugeordnete Telegrammzähleinrichtung (92, 93) aufweist, welche derart ausgebildet ist, dass sie die über die erste Schnittstelle (80) zu sendenden internen Daten- und/oder Steuertelegramme und die über die zweite Schnittstelle (100) zu sendenden internen Daten- und/oder Steuertelegramme fortlaufend zählt, und wobei die internen Daten- und/oder Steuertelegramme jeweils ein Telegrammnummernfeld (205) als weiteres Zustandsinformationsfeld enthalten, in das der jeweilige Wert der ersten Telegrammzählereinrichtung (92, 93) geschrieben und zu einem benachbarten Busteilnehmer (40, 60) übertragen werden kann.

12. Kommunikationssystem nach Anspruch 11,
**dadurch gekennzeichnet, dass**
die Fehlererkennungseinrichtung ferner aufweist:
eine zweite, der ersten und zweiten Schnittstelle (80, 100) zugeordnete Telegrammzähleinrichtung (91, 94), welche derart ausgebildet ist, dass sie die an der ersten Schnittstelle empfangenen internen Daten- und/oder Steuertelegramme und die an der zweite Schnittstelle empfangenen internen Daten- und/oder Steuertelegramme zählt, und
eine Vergleichseinrichtung zum Vergleichen des in einem Daten- und/oder Steuertelegramm empfangenen Zählwertes, der angibt, wie viele Daten- und/oder Steuertelegramme ein benachbarter Busteilnehmer bisher über die entsprechende erste oder zweite Schnittstelle gesendet hat, mit dem von der zweiten Telegrammzählereinrichtung ermittelten Zählwert.

13. Kommunikationssystem nach einem der Ansprüche 10 bis 12,
**dadurch gekennzeichnet, dass**
jeder Busteilnehmer eine Einrichtung zum Erzeugen einer Prüfsumme aufweist, dass die internen Daten- und/oder Steuertelegramme jeweils ein Prüfsummenfeld (209) als weiteres Zustandsinformationsfeld aufweisen, in das der jeweilige Busteilnehmer die erzeugte Prüfsumme schreibt, und dass jeder Busteilnehmer eine Einrichtung zum Auslesen und Auswerten der in einem internen Daten- und/oder Steuertelegramm empfangenen Prüfsumme aufweist.

14. Verfahren zum Austauschen von Daten zwischen einem Netzwerk (209, auf dem Ethernet-Telegramme übertragen werden können, und einer Mehrzahl von Busteilnehmern (40-70) über einen Buskoppler (30), wobei das Netzwerk an eine externe Schnittstelle des Buskopplers (30) angebunden ist und die Mehrzahl von Busteilnehmern (40-70) über eine interne Schnittstelle (34, 35) des Buskopplers (30) in Reihe an einen ringförmigen Übertragungsweg angebunden sind, wobei ein über die externe Schnittstelle des Buskopplers (30) empfangenes Ethernet-Telegramm (170) in einer Umsetzeinrichtung (33) in ein internes Datentelegramm (180), welches keine Steuerdaten des Ethernet-Telegramms enthält, umgesetzt wird, welches an die interne Schnittstelle des Buskopplers (30) weitergeleitet und auf den ringförmigen Übertragungsweg ausgegeben wird, wobei das interne Datentelegramm (180) wenigstens ein Zustandsinformationsfeld (201) für interne Steuerdaten enthält, wobei jeder an die interne Schnittstelle angeschlossene Busteilnehmer bei Durchlauf des internen Datentelegramms auf den ringförmigen Übertragungsweg durch den entsprechenden Busteilnehmer die für den Busteilnehmer bestimmte Nutzungsdaten mit dem auf dem Übertragungsweg umlaufenden internen Datentelegramm austauscht, wobei der Busteilnehmer Nutzdaten aus einem dem Busteilnehmer zugeordneten Datenblock im Datenfeld (211) des internen Datentelegramms (180) und interne Steuerdaten aus dem wenigstens einen Zustandsinformationsfeld (201) des internen Datentelegramms (180) entnehmen und seinerseits Nutzdaten in den dem Busteilnehmer zugeordneten Datenblock des Datenfeldes (211) des internen Datentelegramms sowie interne Steuerdaten in das wenigstens eine Zustandsinformationsfeld (201) des internen Datentelegramms einfügen kann,
wobei
die internen Steuerdaten busteilnehmerbezogene Zustandsinformationen enthalten, und wobei jeder Busteilnehmer interne Steuertelegramme (190, 220) erzeugen kann, welche jeweils ein Startkennungs-Feld (195) für eine die internen Steuertelegrammen identifizierende Startkennung und wenigstens ein Zustandsinformationsfeld (201) für busteilnehmerbezogene Zustandsinformationen enthalten, welche zur dezentralen und autarken Überwachung der Kommunikation zwischen jeweils zwei Busteilnehmern (40, 50; 50, 60) dienen und dass, wenn im Buskoppler (30) keine internen Datentelegramme (180) zur Übertragung vorliegen, jeweils benachbarte Busteilnehmer (40, 50; 50, 60) über unabhängige Kommunikationswege interne Steuertelegramme (190, 220) austauschen, welche zur dezentralen und autarken Überwachung der Kommunikation zwischen jeweils zwei Busteilnehmern dienen.

## Claims

1. A communication system (10), comprising an external network (20), and a bus coupler (30), said bus coupler (30) comprising
an external interface for connecting to an external network (20) on which network-specific telegrams can be transferred;
an internal interface (34, 35) for connecting a plurality of bus subscribers (40 - 70) in series to a ring-shaped transfer path of an underlying bus system (15); and
a converter device (33) which is adapted so as to be able to convert a network-specific telegram (170) received via the external interface into an internal data telegram (180) for transmission via the ring-shaped transfer path and that contains no control data of the network-specific telegram, wherein the internal data telegram (180) is relayed to the internal interface (34) and is output to the ring-shaped transfer path, wherein the internal data telegram contains at least one state information field (201) for internal control information, wherein when the internal data telegram passes on the ring-shaped transfer path through a bus subscriber connected to the internal interface (34, 35) each respective bus subscriber (40 - 70) exchanges the payload data intended for the respective bus subscriber with the internal data telegram (180) circulating on the transfer path, wherein the bus subscriber is adapted so as to be able to extract payload data from a data block associated with the bus subscriber in the data field (211) of the internal data telegram (180) and to extract internal control information from the at least one state information field (201) of the internal data telegram (180), and in turn to insert payload data into the data block associated with the bus subscriber of the data field of the internal data telegram, and to insert its internal control information into the at least one state information field (201) of the internal data telegram (180),
and a plurality of bus subscribers (40 - 70) that are connected in series to the internal interface of the bus coupler via a ring-shaped transfer path, wherein the bus subscribers (40 - 70) each are adapted to interpret the internal data telegrams (180) passing through on the ring-shaped transfer path and to perform a data exchange, and wherein
each bus subscriber (50) has the following features:
a first interface (80) having first transmitting and receiving means (81, 82) for transmitting and receiving internal data telegrams or control telegrams to or from a first neighbouring bus subscriber (40); and
a second interface (100) having second transmitting and receiving means (101, 102) for transmitting and receiving internal data telegrams or control telegrams to or from a second neighbouring bus subscriber (60), and wherein
each bus subscriber (50) includes means (90) for generating internal control telegrams, each containing a start identifier field (195) for a start identifier that identifies the internal control telegram, and at least one state information field (201, 202) for bus subscriber related state information, wherein the internal control telegrams generated by the respective bus subscriber (50) are only transmitted to the neighbouring first and/or second bus subscribers (40, 60) of the respective bus subscriber.

2. The communication system according to claim 1, **characterized in that**
the first and the second interface (80, 100) of each bus subscriber has associated therewith a respective interface identifier, that the internal data telegrams and/or control telegrams each contain an additional state information field (201) for an interface identifier, wherein each bus subscriber comprises means (90) for reading an interface identifier and for writing an interface identifier into the additional state information field (201).

3. The communication system according to claim 1, **characterized in that**
each bus subscriber (50) comprises means for determining the reception quality of the first and the second interface (80, 100); and **in that**
the internal data telegrams and/or control telegrams each contain an additional state information field for a reception state information (202); wherein
each bus subscriber comprises means for reading a reception state information from and for writing a reception state information into the additional state information field.

4. The communication system according to any of claims 1 to 3, **characterized in that**
each bus subscriber (50) comprises means (90) adapted to be responsive to at least one reception state information contained in an internal data telegram or control telegram to close the respective first or second interface.

5. The communication system according to any of claims 1 to 4, **characterized in that**
each bus subscriber (50) comprises means (90) adapted to be responsive to the start identifier (200) contained in a received internal data telegram to interrupt or terminate the generation and/or transmission of internal control telegrams (190, 220) in a defined manner, so that transmission of the internal data telegram (180) is performed in real time.

6. The communication system according to any of claims 1 to 5, **characterized in that**
the start identifier that identifies an internal data telegram or control telegram contains a bit pattern that may be used for synchronizing the respective bus subscriber.

7. The communication system according to any of claims 1 to 6, **characterized in that**
the start identifier (200) that identifies an internal data telegram and the start identifier (195) that identifies a control telegram each contain a respective different bit pattern so that the transmission of internal control telegrams is interrupted or terminated in a defined manner, in particular within one bit duration.

8. The communication system according to any of claims 1 to 7, **characterized in that**
the start identifier that identifies an internal data telegram and/or the start identifier that identifies a control telegram each contain a first and a second bit pattern, wherein each bus subscriber is adapted to recognize a received start identifier already by the first bit pattern.

9. The communication system according to any of claims 1 to 8, **characterized in that**
the internal control telegram contains a data field for transmitting safety-relevant data; and that the bus coupler and/or each bus subscriber is adapted for reading safety-relevant data from said data field and for writing safety-relevant data into said data field.

10. The communication system according to any of claims 2 to 9, **characterized in that**
each bus subscriber (50) comprises error recognition means (90) associated with the first and second interfaces (80, 100) for detecting internal data telegrams and/or control telegrams that have been incorrectly received and/or that have not been recognized at the first and/or the second interface; wherein the internal data telegrams and/or control telegrams each contain two additional state information fields (206, 207) into which the respective result of the error recognition means can be written.

11. The communication system according to claim 10, **characterized in that**
the error recognition means include a first telegram counting means (92, 93) associated with the first and second interfaces (80, 100), which is adapted to consecutively count the internal data telegrams and/or control telegrams to be transmitted via the first interface (80) and the internal data telegrams and/or control telegrams to be transmitted via the second interface (100), and wherein the internal data telegrams and/or control telegrams each contain a telegram number field (205) as an additional state information field, into which the respective value of the first telegram counting device (92, 93) can be written to be transmitted to a neighbouring bus subscriber (40, 60).

12. The communication system according to claim 11, **characterized in that**
the error recognition means further include a second telegram counting means (91, 94) associated with the first and second interfaces (80, 100), which is adapted to count the internal data telegrams and/or control telegrams received at the first interface and the internal data telegrams and/or control telegrams received at the second interface, and comparison means for comparing the count value received in a data telegram and/or control telegram, which indicates how many data telegrams and/or control telegrams a neighbouring bus subscriber has transmitted so far via the respective first or second interface, to the count value determined by the second telegram counting means.

13. The communication system according to any of claims 10 to 12, **characterized in that**
each bus subscriber comprises means for generating a check sum; **in that** the internal data telegrams and/or control telegrams each include a check sum field (209) as an additional state information field into which the respective bus subscriber writes the generated check sum; and **in that** each bus subscriber comprises means for reading and evaluating the check sum received in an internal data telegram and/or control telegram.

14. A method for exchanging data between a network (20) on which Ethernet telegrams can be transferred and a plurality of bus subscribers (40 - 70) via a bus coupler (30), wherein the network is connected to an external interface of the bus coupler (30) and the plurality of bus subscribers (40 - 70) are connected in series to a ring-shaped transfer path via an internal interface (34, 35) of the bus coupler (30); wherein an Ethernet telegram (170) received via the external interface of the bus coupler (30) is converted in a converter device (33) into an internal data telegram (180) which contains no control data of the Ethernet telegram and which is relayed to the internal interface of the bus coupler (30) and is output to the ring-shaped transfer path; wherein the internal data telegram (180) contains at least one state information field (201) for internal control data; wherein when the internal data telegram on the ring-shaped transfer path passes through a bus subscriber connected to the internal interface each respective bus subscriber exchanges the payload data intended for the particular bus subscriber with the internal data telegram circulating on the transfer path; wherein the bus subscriber is able to extract payload data from a data block associated with the bus subscriber in the data field (211) of the internal data telegram (180) and to extract internal control data from the at least one state information field (201) of the internal data telegram (180), and in turn to insert payload data into the data block associated with the bus subscriber of the data field (211) of the internal data telegram and to insert internal control data into the at least one state information field (201) of the internal data telegram, wherein
the internal control data contain bus subscriber related state information, and in that each bus subscriber is able to generate internal control telegrams (190, 220) each containing a start identifier field (195) for a start identifier that identifies the internal control telegrams and at least one state information field (201) for bus subscriber related state information that are used for decentralized and autonomous monitoring of the communication between two respective bus subscribers (40, 50; 50, 60); and in that when no internal data telegrams (180) are present in the bus coupler (30) for transmission, respective neighbouring bus subscribers (40, 50; 50, 60) exchange internal control telegrams (190, 220) via independent communication paths, which internal control telegrams are used for decentralized and autonomous monitoring of the communication between two respective bus subscribers.

## Revendications

1. Système de communication (10), comportant un réseau externe (20) et comportant un coupleur de bus (30), le coupler de bus (30) comportant
une interface externe pour le raccordement à un réseau externe (20), sur lequel peuvent être transmis des télégrammes spécifiques au réseau,
une interface interne (34, 35) pour le raccordement en série d'une pluralité de composants du bus (40-70) à une voie de transmission annulaire d'un système de bus (15) secondaire, et
un dispositif de conversion (33) qui est configuré de telle sorte qu'il peut convertir un télégramme (170) spécifique au réseau, reçu via l'interface externe, en un télégramme de données interne (180) qui est destiné à être transmis via la voie de transmission annulaire et qui ne contient aucune donnée de commande du télégramme spécifique au réseau, le télégramme de données interne (180) étant transmis à l'interface interne (34) et émis sur la voie de transmission annulaire, le télégramme de données interne contenant au moins un champ d'informations d'état (201) pour des informations de commande internes, chaque composant du bus (40-70) raccordé à l'interface interne (34, 35) échangeant via le composant du bus correspondant, au moment du passage du télégramme de données interne sur la voie de transmission annulaire, les données utiles déterminées pour le composant du bus avec le télégramme de données interne (180) circulant sur la voie de transmission, le composant du bus étant configuré de telle sorte qu'il peut prélever des données utiles dans un bloc de données, associé au composant du bus, dans le champ de données (211) du télégramme de données interne (180) et des informations de commande internes dans ledit au moins un champ d'informations de commande (201) du télégramme de données interne (180) et peut insérer, de son côté, des données utiles dans le bloc de données associé au composant du bus, ainsi que ses informations de commande internes dans ledit au moins un champ d'informations d'état (201) du télégramme de données interne (180),
et le système de communication (10) comportant une pluralité de composants du bus (40-70) qui sont raccordés en série à l'interface interne du coupleur de bus via une voie de transmission annulaire, les composants du bus (40-70) étant configurés chacun pour interpréter les télégrammes de données internes (180) passant par la voie de transmission annulaire et pour mettre en oeuvre un échange de données,
chaque composant du bus (50) comportant les caractéristiques suivantes :
une première interface (80) avec un premier dispositif d'émission et de réception (81, 82) pour émettre et recevoir des télégrammes de données ou de commande internes vers ou depuis un premier composant du bus (40) voisin, et
une deuxième interface (100) avec un deuxième dispositif d'émission et de réception (101, 102) pour émettre et recevoir des télégrammes de données ou de commande internes vers ou depuis un deuxième composant du bus (60) voisin, et
chaque composant du bus (50) comportant un dispositif (90) destiné à générer des télégrammes de commande internes qui contiennent chacun un champ de code de démarrage (195) pour un code de démarrage identifiant le télégramme de commande interne et au moins un champ d'informations d'état (201, 202) pour des informations d'état relatives aux composants du bus, les télégrammes de commande internes générés par le composant du bus (50) respectif étant transmis uniquement vers son premier et/ou deuxième composant du bus (40, 60) voisin.

2. Système de communication selon la revendication 1, **caractérisé en ce que** respectivement un code d'interface est associé à la première et à la deuxième interface (80, 100) de chaque composant du bus, **en ce que** les télégrammes de données et/ou de commande internes contiennent chacun un champ d'informations d'état (201) supplémentaire pour un code d'interface, chaque composant du bus comportant un dispositif (90) pour lire un code d'interface et pour écrire un code d'interface dans le champ d'informations d'état (201) supplémentaire.

3. Système de communication selon la revendication 1, **caractérisé en ce que** chaque composant du bus (50) comporte un dispositif pour déterminer la qualité de réception de la première et de la deuxième interface (80, 100), **en ce que** les télégrammes de données et/ou de commande internes contiennent chacun un champ d'informations d'état supplémentaire pour une information d'état de réception (202), chaque composant du bus comportant un dispositif pour lire une information d'état de réception et pour écrire une information d'état de réception dans le champ d'informations d'état supplémentaire.

4. Système de communication selon l'une quelconque des revendications 1 à 3, **caractérisé en ce que** chaque composant du bus (50) comporte un dispositif (90) qui est configuré de telle sorte que, en réponse à au moins une information d'état de réception contenue dans un télégramme de données ou de commande interne, il ferme la première ou deuxième interface concernée.

5. Système de communication selon l'une quelconque des revendications 1 à 4, **caractérisé en ce que** chaque composant du bus (50) comporte un dispositif (90) qui est configuré de telle sorte que, en réponse à un code de démarrage (200) identifiant un télégramme de données interne, il interrompt ou termine de manière définie la création et/ou la transmission de télégrammes de commande internes (190, 220), de telle sorte qu'une transmission du télégramme de données interne (180) se produit en temps réel.

6. Système de communication selon l'une quelconque des revendications 1 à 5, **caractérisé en ce que** le code de démarrage identifiant un télégramme de données ou de commande interne contient un modèle de bit qui peut être utilisé pour la synchronisation du composant du bus respectif.

7. Système de communication selon l'une quelconque des revendications 1 à 6, **caractérisé en ce que** le code de démarrage (200) identifiant un télégramme de données interne et le code de démarrage (195) identifiant un télégramme de commande contiennent chacun un modèle de bit différent, de telle sorte que la transmission de télégrammes de commande internes est interrompue ou terminée de manière définie, en particulier à l'intérieur d'une durée de bit.

8. Système de communication selon l'une quelconque des revendications 1 à 7, **caractérisé en ce que** le code de démarrage identifiant un télégramme de données interne et/ou le code de démarrage identifiant un télégramme de commande contiennent respectivement un premier et un deuxième modèle de bit, chaque composant du bus étant configuré de telle sorte que, déjà par l'intermédiaire du premier modèle de bit, il détecte un code de démarrage reçu.

9. Système de communication selon l'une quelconque des revendications 1 à 8, **caractérisé en ce que**
le télégramme de commande interne contient un champ de données pour la transmission de données pertinentes pour la sécurité, et **en ce que**
le coupleur de bus et/ou chaque composant du bus sont configurés pour lire dans le champ de données des données pertinentes pour la sécurité et pour écrire dans le champ de données des données pertinentes pour la sécurité.

10. Système de communication selon l'une quelconque des revendications 2 à 9, **caractérisé en ce que** chaque composant du bus (50) contient un dispositif de détection d'erreurs (90), qui est associé à la première et à la deuxième interface (80, 100) et est destiné à détecter des télégrammes de données et/ou de commande internes qui ont été reçus de manière erronée et/ou n'ont pas été identifiés à la première et/ou à la deuxième interface, les télégrammes de données et/ou de commande internes contenant chacun deux champs d'informations d'état (206, 207) supplémentaires, dans lesquels peut être écrit le résultat correspondant du dispositif de détection d'erreurs.

11. Système de communication selon la revendication 10, **caractérisé en ce que** le dispositif de détection d'erreurs comporte un premier dispositif de comptage de télégrammes (92, 93), qui est associé à la première et à la deuxième interface (80, 100) et qui est configuré de telle sorte qu'il compte en continu les télégrammes de données et/ou de commande internes à émettre via la première interface (80) et les télégrammes de données et/ou de commande internes à émettre via la deuxième interface (100), et les télégrammes de données et/ou de commande internes contenant chacun un champ de numéros de télégrammes (205) en tant que champ d'informations d'état supplémentaire, dans lequel la valeur respective du premier dispositif de comptage de télégrammes (92, 93) peut être écrite et peut être transmise vers un composant du bus (40, 60) voisin.

12. Système de communication selon la revendication 11, **caractérisé en ce que** le dispositif de détection d'erreurs comporte, en outre :
un deuxième dispositif de comptage de télégrammes (91, 94), qui est associé à la première et à la deuxième interface (80, 100) et qui est configuré de telle sorte qu'il compte les télégrammes de données et/ou de commande internes reçus à la première interface et les télégrammes de données et/ou de commande internes reçus à la deuxième interface, et
un dispositif de comparaison, par lequel la valeur de comptage, qui est reçue dans un télégramme de données et/ou de commande et qui indique combien de télégrammes de données et/ou de commande ont été émis jusqu'à présent par un composant du bus voisin via la première ou la deuxième interface correspondante, est comparée à la valeur de comptage déterminée par le deuxième dispositif de comptage de télégrammes.

13. Système de communication selon l'une quelconque des revendications 10 à 12, **caractérisé en ce que** chaque composant du bus comporte un dispositif destiné à générer une somme de contrôle, **en ce que** les télégrammes de données et/ou de commande internes comportent chacun un champ de sommes de contrôle (209) en tant que champ d'informations d'état supplémentaire, dans lequel le composant du bus concerné écrit la somme de contrôle générée, et **en ce que** chaque composant du bus comporte un dispositif pour lire et analyser la somme de contrôle reçue dans un télégramme de données et/ou de commande interne.

14. Procédé permettant d'échanger des données entre un réseau (209), sur lequel peuvent être transmis des télégrammes Ethernet, et une pluralité de composants du bus (40-70) par l'intermédiaire d'un coupleur de bus (30), le réseau étant raccordé à une première interface du coupleur de bus (30) et la pluralité de composants du bus (40-70) étant raccordés en série à une voie de transmission annulaire via une interface interne (34, 35) du coupleur de bus (30), un télégramme Ethernet (170), reçu via l'interface externe du coupleur de bus (30), étant converti dans un dispositif de conversion (33) en un télégramme de données interne (180) qui ne contient aucune donnée de commande du télégramme Ethernet et qui est transmis à l'interface interne du coupleur de bus (30) et est émis sur la voie de transmission annulaire, le télégramme de données interne (180) contenant au moins un champ d'informations d'état (201) pour des données de commande internes, chaque composant du bus raccordé à l'interface interne échangeant via le composant du bus correspondant, au moment du passage du télégramme de données interne sur la voie de transmission annulaire, les données utiles déterminées pour le composant du bus avec le télégramme de données interne circulant sur la voie de transmission, le composant du bus pouvant prélever des données utiles dans un bloc de données associé au composant du bus dans le champ de données (211) du télégramme de données interne (180) et des données de commande internes dans ledit au moins un champ d'informations d'état (201) du télégramme de données interne (180) et pouvant insérer, de son côté, des données utiles dans le bloc de données, associé au composant du bus, du champ de données (211) du télégramme de données interne, ainsi que des données de commande internes dans ledit au moins un champ d'informations d'état (201) du télégramme de données interne, les données de commande internes contiennent des informations d'état relatives aux composants du bus, et en ce que chaque composant du bus peut générer des télégrammes de commande internes (190, 220), qui contiennent chacun un champ de code de démarrage (195) pour un code de démarrage identifiant les télégrammes de commande internes et au moins un champ d'informations d'état (201) pour des informations d'état relatives aux composants du bus, qui sont destinés à la surveillance décentralisée et autarcique de la communication entre respectivement deux composants du bus (40, 50 ; 50, 60), et en ce que, lorsque aucun télégramme de commande interne (180) à transmettre n'est présent dans le coupleur de bus (30), respectivement des composants du bus (40, 50 ; 50, 60) voisins échangent, via des voies de communication indépendantes, des télégrammes de commande internes (190, 220) qui sont destinés à la surveillance décentralisée et autarcique de la communication entre respectivement deux composants du bus.
